# EUROPEAN PATENT APPLICATION

(11) **EP 2 546 043 A1**
(43) Date of publication of application: **16.01.2013**
(21) Application number: 10847471.9
(22) Date of filing: 10.06.2010
(51) Int. Cl.: B29C 45/16, B29C 45/26, B29D 11/00, B29L 11/00

(54) **METHOD FOR PRODUCING RESIN MOLDED ARTICLE, RESIN MOLDED ARTICLE, RESIN MOLDED ARTICLE FOR ENDOSCOPE, ENDOSCOPE USING RESIN MOLDED ARTICLE, AND APPARATUS FOR PRODUCING THE RESIN MOLDED ARTICLE**

(30) Priority: 09.03.2010 JP 2010051988
(71) Applicant: Olympus Corporation, Shibuya-ku Tokyo 151-0072 (JP); Olympus Medical Systems Corp., Tokyo 151-0072 (JP)
(72) Inventor: KIKUMORI, Kazuhiro, Tokyo 192-8512 (JP); NONAKA, Wataru, Tokyo 192-8512 (JP); SHINMURA, Toru, Tokyo 192-8512 (JP)
(74) Representative: Kuhnen & Wacker
(86) International application number: PCT/JP2010/059864
(87) International publication number: WO 2011/111242

(57) **Abstract**

A manufacturing method of a resin molded article (5, 313, 353), includes a primary molding step of molding a primary compact (3, 321) having an optical element (1, 312, 52) and a protruding portion (2, 320) that protrudes from the optical element (1, 312, 52) by using a light transmissive molding material, and a secondary molding step of molding a secondary compact (4, 306a, 316, 351) that supports the primary compact (3, 321) by using a molding material different from the molding material of the primary compact (3, 321) and integrating the primary compact (3, 321) with the secondary compact (4, 306a, 316, 351), wherein the protruding portion (2, 320) is molded to protrude on the secondary compact (4, 306a, 316, 351) side, and at the primary molding step, the molding material of the primary compact (3, 321) is supplied into a molding space (1A) for the optical element (1, 312, 52) from a gate (24a, 322a) of a molding die (29) for the primary compact (3, 321) through a molding space (2A) for the protruding portion (2, 320) and it is thereby supplied into a cavity (34) of a molding die (29) for the primary compact (3, 321).

## Description

### Technical Field

The present invention relates to a manufacturing method of a resin molded article that is molded by integrating an optical element used for, e.g., observation optical system of an endoscope, and/or an imaging optical system of a camera, and a support member that supports this optical element, a resin molded article, a resin molded article for an endoscope, an endoscope using a resin molded article, and a manufacturing apparatus of the resin molded article.

### Background Art

For example, as a method of integrally molding an optical element such as a lens and a support member that supports this optical element using a resin material, a method using a double molding technology is known. The general method based on the double molding is as follows. First, as a primary molding, a die having a cavity, which has a shape of the optical element, is filled with a molten resin material for the primary molding, and the optical element (a primary molded article) is molded. Then, as a secondary molding, a die having a cavity, which has a shape of the support member, is filled with a molten resin material for the secondary molding, and the support member is formed. At this time, the optical element subjected to the primary molding is previously set in the cavity of the die for the secondary molding. Further, when the support member (a secondary molded article) is subjected to the secondary molding from above the optical element subjected to the primary molding, a double molded article having the integrated optical element and support member can be obtained.

In such a double molding method, before performing the secondary molding, the optical element subjected to the primary molding must be disconnected from a gate. This gate is a part of a supply path for the molten resin material formed in the die for the primary molding. At the time of an operation for disconnecting this gate, a gate mark remains on a surface of the optical element. Since irregularities of the gate mark scatter light on the surface of the optical element, they may possibly adversely affect an optical function of the optical element.

Further, Patent Literature 1 discloses a die for multicolor molding which is used for molding a barrel and an optical element such as a convex lens or a concave lens assembled into this barrel using different resin materials in multiple colors. A coupling portion of the optical element and a gate is provided outside an optical effective diameter on a surface of the optical element. The optical element is molded in this manner. As a result, a reduction in optical function due to a gate mark is prevented from occurring within the optical effective diameter.
Patent Literature 1: Jpn. Pat. Appln. KOKAI Publication No. 3-248823

### Disclosure of Invention

In general, when molding an optical element having an optical effective diameter substantially equal to a diameter of the optical element in product design of the optical element, an area outside the optical effective diameter is very small. Therefore, in the conventional technology, it is difficult to assure an arrangement position of a coupling portion on a surface of the optical element outside the optical effective diameter so that the coupling portion does not affect the optical function.

Furthermore, to provide a gate, when a diameter of the optical element is increased, a product of the optical element itself becomes large. Therefore, when the optical element is applied to an optical component such as a lens for an endoscope, a diameter of an insertion unit of the endoscope is increased, and insertability and other qualities of the insertion unit are sacrificed.

In view of the above-described circumstances, it is an object of the present invention to provide a manufacturing method of a resin molded article which can assure a position at which a gate used for molding an optical element is provided even if an optical effective diameter of the optical element is substantially equal to a diameter of the optical element and which has the optical element and a support member integrated with each other, a resin molded article, a resin molded article for an endoscope, an endoscope using a resin molded article, and a manufacturing apparatus of this resin molded article.

According to an aspect of embodiments, a manufacturing method of a resin molded article, includes a primary molding step of molding a primary compact having an optical element and a protruding portion that protrudes from the optical element by using a light transmissive molding material; and a secondary molding step of molding a secondary compact that supports the primary compact by using a molding material different from the molding material of the primary compact and integrating the primary compact with the secondary compact, wherein the protruding portion is molded to protrude on the secondary compact side, and at the primary molding step, the molding material of the primary compact is supplied into a molding space for the optical element from a gate of a molding die for the primary compact through a molding space for the protruding portion and it is thereby supplied into a cavity of a molding die for the primary compact.

### Brief Description of Drawings

FIG. 1A is a top view showing a double molded article according to a first embodiment of the present invention;
FIG. 1B is a cross-sectional view taken along a line 1B-1B in FIG. 1A;
FIG. 1C is a cross-sectional view taken along a line 1C-1C in FIG. 1A;
FIG. 1D is a cross-sectional view taken along a line 1D-1D in FIG. 1C;
FIG. 2 is a longitudinal cross-sectional view of an entire double molding die according to the first embodiment;
FIG. 3 is a longitudinal cross-sectional view of a primary molding die according to the first embodiment;
FIG. 4 is a cross-sectional view taken along a line IV-IV in FIG. 3;
FIG. 5 is a cross-sectional view taken along a line V-V in FIG. 3;
FIG. 6 is a longitudinal cross-sectional view of a secondary molding die according to the first embodiment;
FIG. 7 is a longitudinal cross-sectional view showing a state that the primary molding die according to the first embodiment is opened;
FIG. 8 is a longitudinal cross-sectional view for explaining a state that a molten resin material is supplied into a molding surface of a protruding portion from a first molding sprue of the primary molding die according to the first embodiment through a pin point gate;
FIG. 9 is a transverse cross-sectional view for explaining a state that the molten resin material is supplied into the molding surface of the protruding portion from the primary molding sprue of the primary molding die according to the first embodiment through the pin point gate;
FIG. 10 is a longitudinal cross-sectional view showing a state that a secondary molding die according to the first embodiment is opened;
FIG. 11 is a longitudinal cross-sectional view showing a secondary cavity formed when the secondary molding die according to the first embodiment is clamped;
FIG. 12 is a longitudinal cross-sectional view showing a state that the entire double molding die according to the first embodiment is opened;
FIG. 13 is a longitudinal cross-sectional view showing a disconnected portion of a protruding portion of a primary compact and the primary molding sprue when the secondary molding die according to the first embodiment is opened;
FIG. 14 is a longitudinal cross-sectional view showing a gate mark on the protruding portion of the primary compact according to the first embodiment;
FIG. 15 is a longitudinal cross-sectional view showing a state that the entire double molding die according to the first embodiment is closed and clamped;
FIG. 16 is a longitudinal cross-sectional view of the secondary molding die showing an interval between an optical function surface of the primary compact mounted on a movable die plate of the secondary molding die according to the first embodiment and a molding surface of a fixed die plate;
FIG. 17 is a longitudinal cross-sectional view of the secondary molding die showing a state that the optical function surface of the primary compact on the movable die plate of the secondary molding die according to the first embodiment is appressed against the molding surface of the fixed die plate;
FIG. 18 is a longitudinal cross-sectional view of the secondary molding die showing a state that a secondary cavity of the secondary molding die according to the first embodiment is filled with a colored resin;
FIG. 19 is a longitudinal cross-sectional view of the secondary molding die showing an opened state of the secondary molding die according to the first embodiment;
FIG. 20 is a plan view showing a protruding portion of a primary compact according to a second embodiment of the present invention;
FIG. 21 is a cross-sectional view taken along a line 21-21 in FIG. 20;
FIG. 22 is a longitudinal cross-sectional view showing a modification of a double molded article according to the second embodiment;
FIG. 23 is a cross-sectional view taken along a line 23-23 in FIG. 22;
FIG. 24 is a side elevation showing a configuration of an entire endoscope according to a third embodiment of the present invention;
FIG. 25A is a front view of a distal end portion of the endoscope according to the third embodiment;
FIG. 25B is a side elevation of the distal end portion of the endoscope according to the third embodiment;
FIG. 26 is a cross-sectional view taken along a line 26-26 in FIG. 25A;
FIG. 27 is a cross-sectional view taken along a line 27-27 in FIG. 25A;
FIG. 28 is a cross-sectional view taken along a line 28-28 in FIG. 25B;
FIG. 29 is a longitudinal cross-sectional view showing a double molded article at the distal end portion of the endoscope according to the third embodiment;
FIG. 30 is a transverse cross-sectional view showing a modification of the double molded article at the distal end portion of the endoscope according to the third embodiment;
FIG. 31 is a side elevation showing a configuration of an entire endoscope according to a fourth embodiment of the present invention;
FIG. 32A is a front view showing a distal end portion of the endoscope according to the fourth embodiment;
FIG. 32B is a side elevation of the distal end portion of the endoscope according to the fourth embodiment;
FIG. 33 is a cross-sectional view taken along a line 33-33 in FIG. 32A;
FIG. 34 is a cross-sectional view taken along a line 34-34 in FIG. 32B;
FIG. 35 is a cross-sectional view taken along a line 35-35 in FIG. 32A;
FIG. 36 is a cross-sectional view taken along a line 36-36 in FIG. 32A and also a longitudinal cross-sectional view showing a double molded article at the distal end portion of the endoscope according to the fourth embodiment;
FIG. 37A is a longitudinal cross-sectional view of a primary part showing Modification 1 of a fixing method of an endoscopic lens;
FIG. 37B is a longitudinal cross-sectional view of a primary part showing Modification 2 of the fixing method of an endoscopic lens; and
FIG. 37C is a longitudinal cross-sectional view of a primary part showing Modification 3 of the fixing method of an endoscopic lens.

Best Mode for Carrying Out the Invention Embodiments according to the present invention will now be described hereinafter with reference to the drawings.

### [First Embodiment]

### (Configuration)

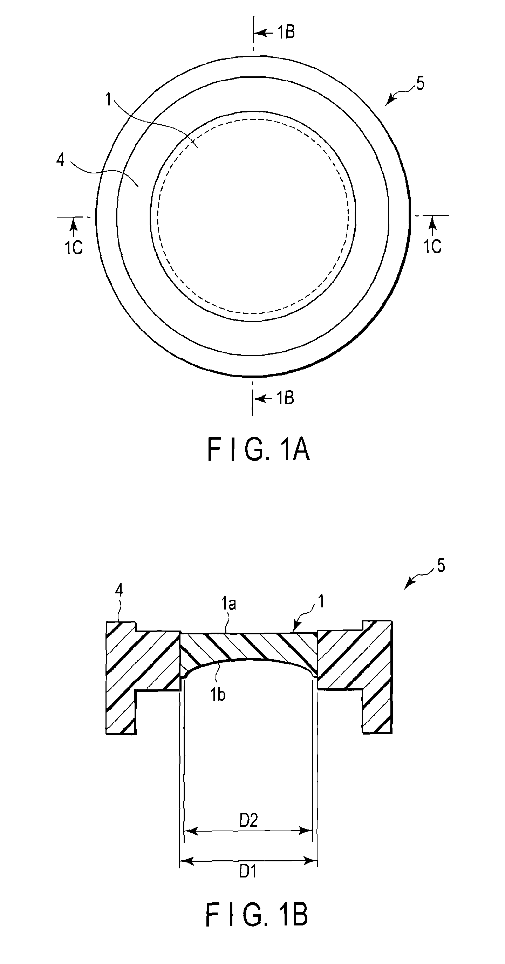

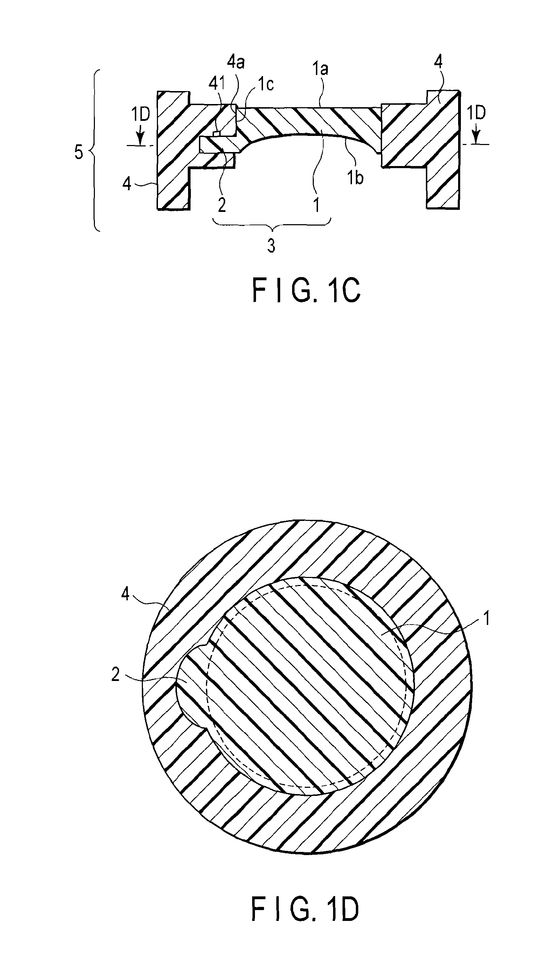

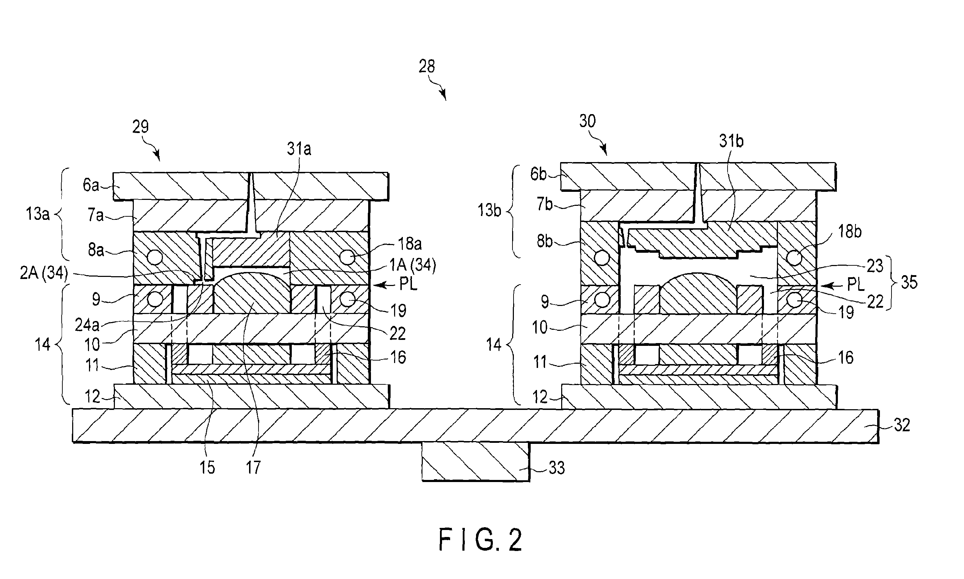

FIG. 1A, FIG. 1B, FIG. 1C, and FIG. 2 to FIG. 19 show a first embodiment according to the present invention. FIG. 1A is a top view of a double molded article 5 which is a resin molded article according to this embodiment. FIG. 1B is a cross-sectional view taken along a line 1B-1B in FIG. 1A, FIG. 1C is a cross-sectional view taken along a line 1C-1C in FIG. 1A, and FIG. 1D is a cross-sectional view taken along a line 1D-1D in FIG. 1C. Further, FIG. 2 is a longitudinal cross-sectional view of an entire double molding die (a molding die) 28 configured to mold the double molded article 5.

As shown in FIG. 1A, FIG. 1B, FIG. 1C, and FIG. 1D, the double molded article 5 comprises a primary compact 3 having an optical element 1 and a protruding portion 2 protruding on an outer periphery of the optical element 1 and a cylindrical support member (a secondary compact) 4 that supports the optical element 1. The optical element 1 is, e.g., a plano-concave lens made of a light transmissive resin material. For example, one surface of the optical element 1 is a flat surface. That is, the primary compact 3 is molded using a light transmissive molding material. As shown in FIG. 1B and FIG. 1C, the optical element 1 has two surfaces that face each other in vertical directions and a peripheral wall surface 1c which is the outer periphery. These two faces serve as optical function surfaces 1a and 1b, respectively. In the two surfaces shown in FIG. 1B and FIG. 1C, the upper surface is the planar optical function surface 1a, and the lower surface is the optical function surface 1b having a concave curved surface shape. The protruding portion 2 protrudes outwards from the peripheral wall surface 1c (the outer periphery). As described above, the protruding portion 2 is provided at a position other than the optical function surfaces 1a and 1b which are functional portions of the primary compact 3. A thickness of the protruding portion 2 is smaller than that of the peripheral wall surface 1c. The support member 4 is a lens frame used for positioning in a non-illustrated lens barrel when the optical element 1 is disposed to the non-illustrated lens barrel. A molding material of the support member 4 is different from a molding material of the primary compact 3. The support member 4 has peripheral wall portions 4a surrounding the peripheral wall surface 1c, and the optical element 1 is supported between the peripheral wall portions 4a.

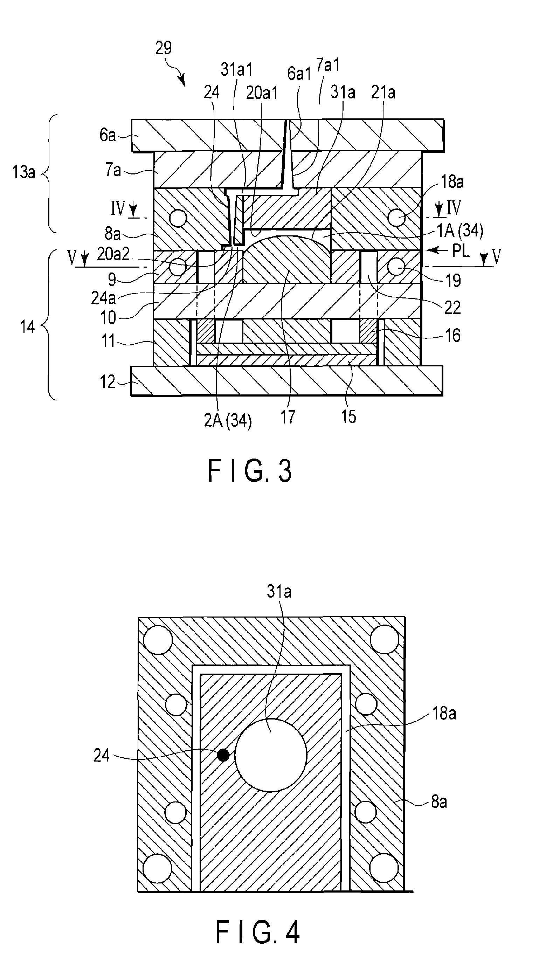

As shown in FIG. 1C and FIG. 1D, this embodiment is characterized in that the protruding portion 2 is provided on the outer periphery of the optical element 1. The protruding portion 2 is molded to protrude on the support member 4 side. A molding material of the optical element 1 is a molten material. This molten material is supplied into a primary cavity 34 of a primary molding die 29 (see FIG. 2) through a pin point gate 24a (see FIG. 3) for supply. The primary molding die 29 is a molding die for the primary compact 3. The protruding portion 2 has a sufficient size to be coupled with the pin point gate 24a.

In the optical element 1, as shown in FIG. 1B, an optical effective diameter D2 of the optical element 1 is slightly smaller than a diameter D1 of the optical element 1. Further, the protruding portion 2 is arranged on the outer periphery of the optical element 1 corresponding to a position outside the range of the optical effective diameter D2. Therefore, optical functions of the optical element 1 are not obstructed by this protruding portion 2.

Furthermore, after the primary compact 3 is molded, when performing secondary molding of the support member 4 as the secondary compact, the support member 4 is molded integrally with the optical element 1 in such a manner that the protruding portion 2 is buried in the support member 4. Moreover, in this embodiment, although the optical element 1 is, e.g., the plano-concave lens, the present invention is not restricted thereto.

A configuration of a double molding die 28 will now be described with reference to FIG. 2. The double molding die 28 according to this embodiment comprises the primary molding die (a primary forming die) 29 and a secondary molding die (a secondary forming die) 30. The primary molding die 29 and the secondary molding die 30 are arranged on a movable platen 32 of a later-described injection molding machine.

The primary molding die 29 has a primary fixed die 13a and a movable die 14 that are arranged to face each other while sandwiching a parting line (which will be referred to as PL hereinafter) therebetween. The movable die 14 is arranged to be movable in die opening/closing directions (the vertical directions in FIG. 2) with respect to the primary fixed die 13a. Moreover, the secondary molding die 30 has a secondary fixed die 13b and the movable die 14 that are arranged to face each other while sandwiching the PL. The movable die 14 is arranged to be movable in the die opening/closing directions (the vertical directions in FIG. 2) with respect to the secondary fixed die 13b.

In the primary molding die 29 and the secondary molding die 30, a configuration of the primary fixed die 13a is different from a configuration of the secondary fixed die 13b, and a configuration of the movable die on the primary side is equal to that on the secondary side. Therefore, designations of constituent members of the movable die on the primary side are not discriminated from those on the secondary side, and they will be referred to as the movable die 14 hereinafter.

At the time of the molding, after the primary molding die 29 performs the primary molding of the primary compact 3 including the optical element 1, and the secondary molding die 30 carries out the secondary molding of the support member 4. At the same time that the support member 4 is subjected to the secondary molding, the primary compact 3 and the support member 4 are integrated.

As shown in FIG. 3, the primary fixed die 13a has a primary fixed attachment plate 6a, a primary fixed fall plate 7a, and a primary fixed die plate 8a. A fixing insert 31a is inserted through the primary fixed die plate 8a.

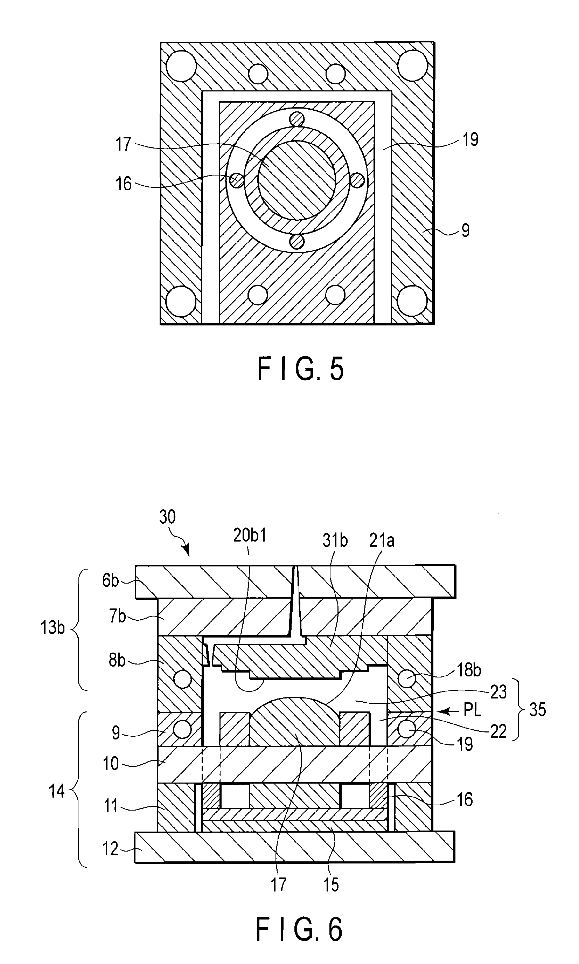

The primary fixed die 13a faces the movable die 14. The movable die 14 has a movable die plate 9, a movable receiving plate 10, a spacer block 11, and a movable attachment plate 12. On the inner side of the spacer block 11, an ejector plate 15 constituting a protruding mechanism is provided. To this ejector plate 15 are disposed four ejector pins 16 and one movable insert 17 as shown in FIG. 5. The movable insert 17 is arranged to face the fixed insert 31a at a distance.

As shown in FIG. 6, the secondary fixed die 13b has a secondary fixed attachment plate 6b, a secondary fixed fall plate 7b, and a secondary fixed die plate 8b. A fixing insert 31b is inserted through the secondary fixed die plate 8b. This secondary fixed die 13b faces the movable die 14. This movable die 14 has the same configuration as the movable die 14 that faces the primary fixed die 13a.

The movable attachment plate 12 of the primary molding die 29 and the movable attachment plate 12 of the secondary molding die 30 are fixed to the same movable platen 32 of the injection molding machine. This movable platen 32 can move in a die opening direction. A rotary shaft 33 that is parallel to the die opening direction is provided at the center position of the movable platen 32. The movable platen 32 can rotate on this rotary shaft 33. Additionally, the primary fixed attachment plate 6a of the primary molding die 29 and the secondary fixed attachment plate 6b of the secondary molding die 30 are fixed to a non-illustrated fixed platen of the injection molding machine.

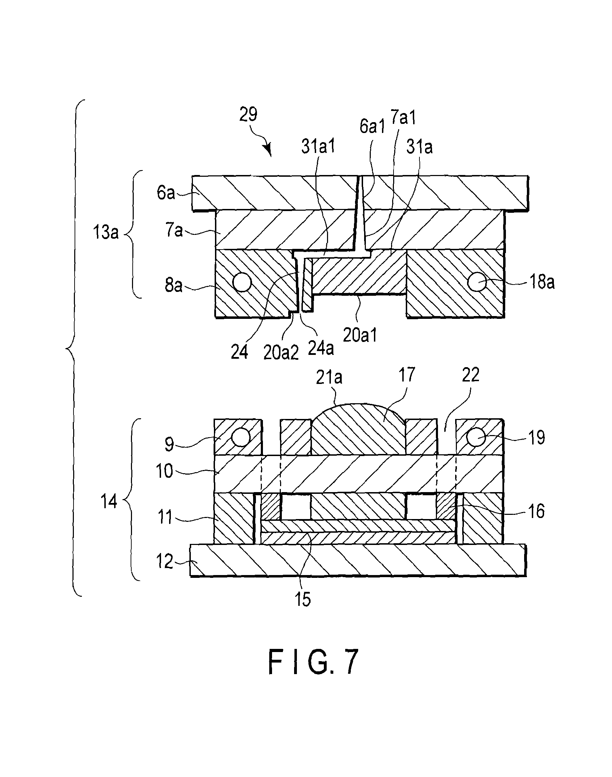

A detailed mechanism of the primary molding die 29 will now be described. FIG. 7 shows a state that the primary molding die 29 is opened. As shown in FIG. 7, in the primary fixed die plate 8a of the primary fixed die 13a, a molding surface 20a1 that is flat to the PL side is formed at a substantially central part of the fixing insert 31a. This flat molding surface 20a1 molds a planar optical function surface 1a of the optical element 1. Further, a recessed molding surface 20a2 is formed on the primary fixed die plate 8a. The molding surface 20a2 molds the protruding portion 2 of the primary compact 3 on the PL. This molding surface 20a2 is arranged on the outer peripheral side of the flat molding surface 20a1 of the fixing insert 31a and on the movable die plate 9 side than the molding surface 20a1.

The movable die plate 9 faces the primary fixed die plate 8a. The movable insert 17 is arranged in the movable die plate 9 to be apart from the flat molding surface 20a1 and face the molding surface 20a1. A molding surface 21a having a protruding curved surface shape is formed on the movable insert 17. The molding surface 21a having the protruding curved surface shape molds an optical function surface 1b having a concave curved surface shape of the optical element 1.

Furthermore, at the time of mold clamping (see FIG. 3) of the primary fixed die 13a and the movable die 14 of the primary molding die 29, the flat molding surface 20a1, the flat molding surface 20a2, and the molding surface 21a constitute a primary cavity 34 between the primary fixed die 13a and the movable die 14. The primary cavity 34 is required for molding of the primary compact 3. The molding surface 21a has a convex curved surface shape. The molding surface 21a faces the molding surface 20a1 and the molding surface 20a2 at a distance. This primary cavity 34 includes a molding space 2A for the protruding portion 2 and a molding space 1A for the optical element 1. At the time of molding of the primary compact 3, the molding surface 20a1 of the primary fixed die 13a that forms the molding space 1A forms the optical function surface 1a of the optical element 1, and the molding surface 21a having the convex curved surface shape of the movable die 14 that forms the molding space 1A forms the optical function surface 1b of the optical element 1. At the same time, the molding surface 20a2 of the primary fixed die 13a that forms the molding space 2A for the protruding portion 2 forms a part of the surface of the protruding portion 2.

Furthermore, supply paths 6a1 and 7a1 through which a molten material as a molding material of the primary compact 3 is supplied in the die opening direction are formed at a central position of the primary fixed attachment plate 6a of the primary fixed die 13a and a central position of the primary fixed fall plate 7a. Moreover, in the primary fixed die plate 8a are formed a primary molding sprue 24 and a pin point gate 24a through which the primary cavity 34 of the molding die for the primary compact 3 is filled (supplied) with a resin (the molten material) as the molding material of the primary compact 3. The pin point gate 24a is provided on the molding surface 20a2 protruding on the support member 4 side. On the upper surface of the fixing insert 31a, a communication path 31a1 through which the supply path 7a1 of the primary fixed fall plate 7a communicates with the primary molding sprue 24 of the primary fixed die plate 8a is formed.

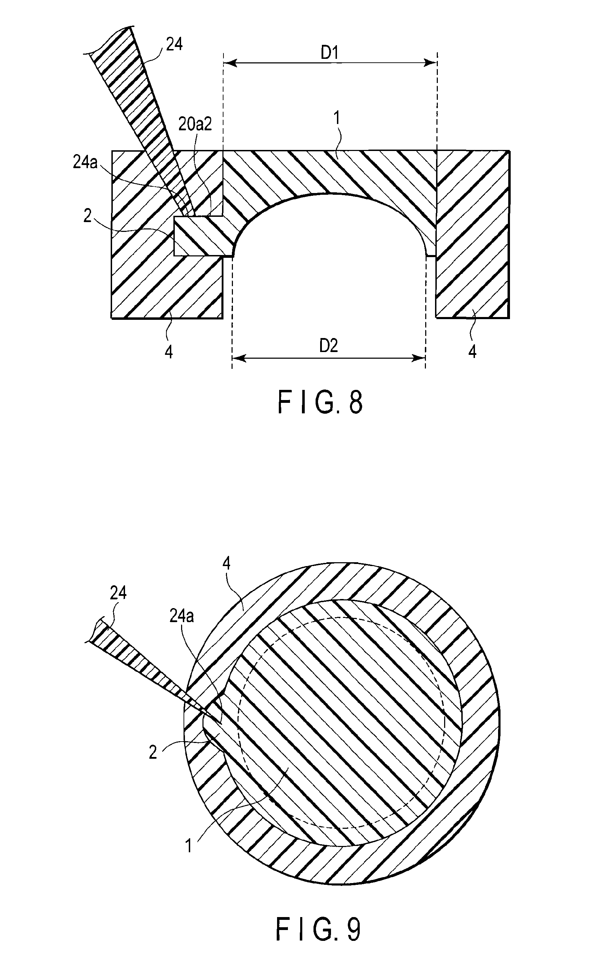

Additionally, at the time of molding the primary compact 3, the molten material as the molding material of the primary compact 3 is supplied to the primary molding sprue 24 in the primary fixed die plate 8a from the supply paths 6a1 and 7a1 of the primary fixed attachment plate 6a and the primary fixed fall plate 7a through the communication path 31a1 of the fixed insert 31a. Further, as shown in FIG. 8 and FIG. 9, the molten material is supplied into the molding surface 20a2 for the protruding portion 2 from this primary molding sprue 24 through the pin point gate 24a, and it fills the primary cavity 34 of the primary compact 3 through the molding surface 20a2 of this protruding portion 2.

Furthermore, as shown in FIG. 4, a temperature control tube 18a is arranged in the primary fixed die plate 8a. The temperature control tube 18a is arranged like a peripheral wall of the primary cavity in the primary fixed die plate 8a. A temperature control medium such as water or oil is accommodated in this temperature control tube 18a in such a manner that this medium constantly flows.

As shown in FIG. 5, a temperature control tube 19 is arranged in the movable die plate 9. Like the temperature control tube 18a in the primary fixed die plate 8a, a temperature control medium such as water or oil is accommodated in this temperature control tube 19 in such a manner that this medium constantly flows.

Moreover, a space 22 is formed in the movable die plate 9. The space 22 is formed at the outer peripheral portion of the molding surface 21a having the convex curved surface shape on the side facing the PL, and it faces a part of a secondary compact cavity of the support member 4 of the double molded article 5 concentrically with a die axis center. Additionally, the four ejector pins 16 are arranged on a bottom surface of this space 22 (an opposite side of the PL plane) to come into contact with the bottom surface (see FIG. 5).

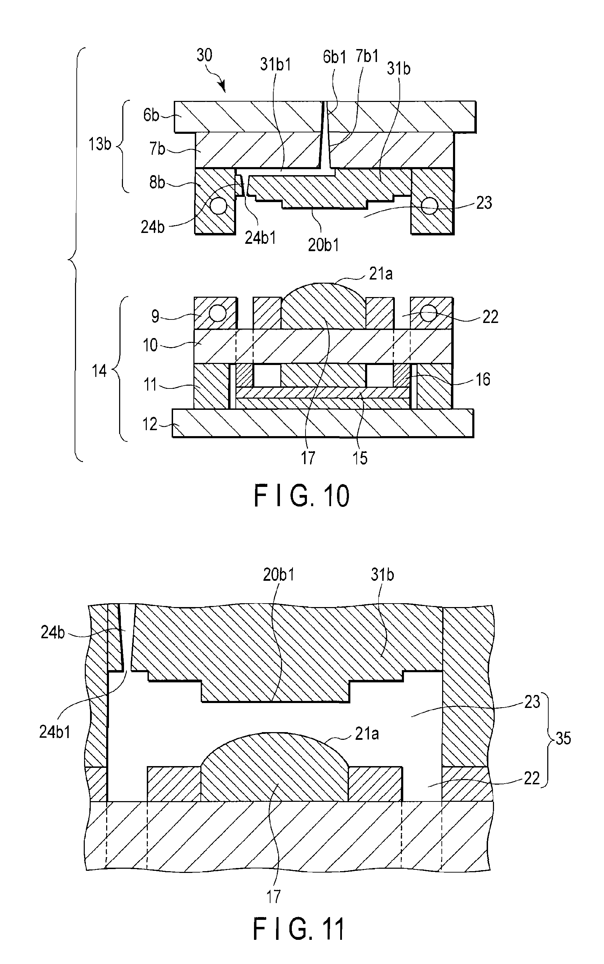

A detailed mechanism of the secondary molding die 30 will now be described. FIG. 10 shows a state that the secondary molding die 30 is opened. As shown in FIG. 10, in the secondary fixed die plate 8b of the secondary fixed die 13b, a concave portion 23 for forming the secondary molding cavity is formed at a fitting portion of the fixing insert 31b. In this concave portion 23, a flat molding surface 20b1 facing the PL side is formed at the central part of the fixing insert 31b.

Further, at the central position of the secondary fixed attachment plate 6b and the central position of the secondary fixed fall plate 7b of the secondary fixed die 13b, supply paths 6b1 and 7b1 through which a molten material as a molding material of the secondary compact is supplied in the die opening direction are formed, respectively. Furthermore, in the secondary fixed die plate 8b, a secondary molding sprue 24b and a pin point gate 24b1 for filling the primary cavity 34 with a resin are provided. The pin point gate 24b1 is provided at the outer peripheral edge portion of the fixed insert 31b arranged on the outer peripheral side of the molding surface 20b1. On the upper surface of the fixing insert 31b, a communication path 31b1 through which the supply path 7b1 of the secondary fixed fall plate 7b communicates with the secondary molding sprue 24b of the secondary fixed die plate 8b is formed.

At the time of fastening the secondary fixed die 13b and the movable die 14 of the secondary molding die 30, the primary compact 3 is set between the secondary fixed die 13b and the movable die 14 in advance. Moreover, as shown in FIG. 11, a secondary cavity 35 is formed around the primary compact 3 in between the secondary fixed die 13b and the movable die 14. The secondary cavity 35 communicates with the concave portion 23 and the space 22 of the secondary fixed die 13b. The space 22 is arranged on the movable die plate 9 side of the movable die 14 and arranged to face the concave portion 23 to sandwich the PL. When this secondary cavity 35 is filled with the resin, the secondary molding of the support member 4 is performed.

A manufacturing method of the double molded article 5 will now be described. When manufacturing the double molded article 5 as a resin molded article according to this embodiment, the double molding die 28 shown in FIG. 2 is used. In the double molding die 28 depicted in FIG. 2, the primary molding die 29 molds the primary compact 3 (a primary molding step) and, at the same time, the secondary molding die 30 performs the secondary molding of the support member 4 as the secondary compact (a secondary molding step).

When molding the primary compact 3 by the primary molding die 29 (the primary molding step), the molten material is first supplied to the primary molding sprue 24 in the primary fixed die plate 8a from the supply paths 6a1 and 7a1 in the primary fixed attachment plate 6a and the primary fixed fall plate 7a through the communication path 31a1 of the fixing insert 31a by a non-illustrated resin injection unit. The molten material is a molding material of the primary compact 3, and it is a transparent resin. This molten material is supplied to the molding space 1A for the optical element 1 from the primary molding sprue 24 through the pin point gate 24a, the molding surface 20a2 of the protruding portion 2, and the molding space 2A for the protruding portion 2. As a result, the molten material is supplied into the primary cavity 34 of the primary compact 3 and fills. It is to be noted that the resin for molding the primary compact 3 that is injected into the primary cavity 34 is selected from general transparent resin materials such as PC (polycarbonate).

Then, the resin filling the primary cavity 34 is maintained in a pressure keeping state under a predetermined pressure for a predetermined time. Subsequently, when the resin filling the primary cavity 34 is cooled, the primary compact 3 formed of the optical element 1 and the protruding portion 2 can be obtained.

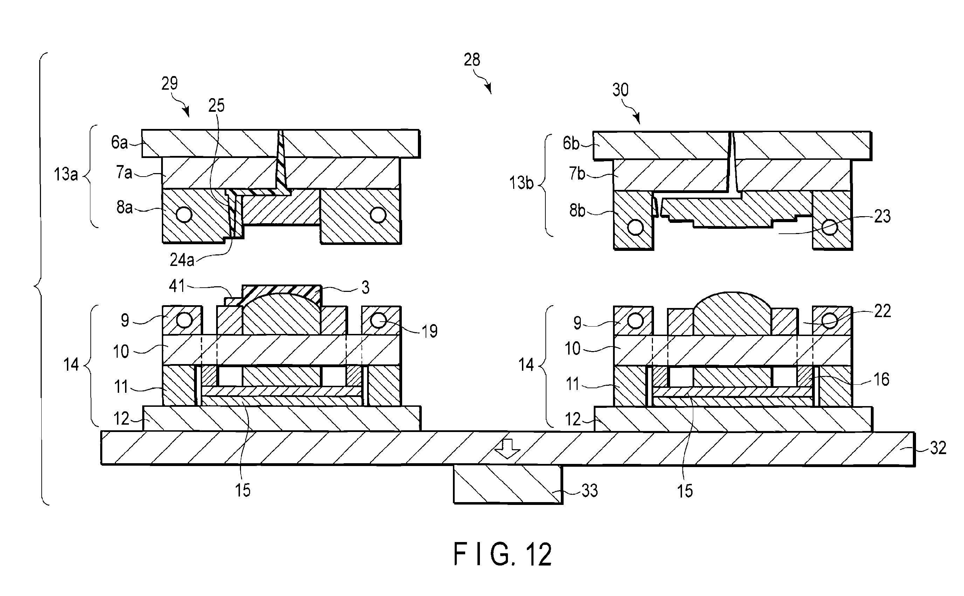

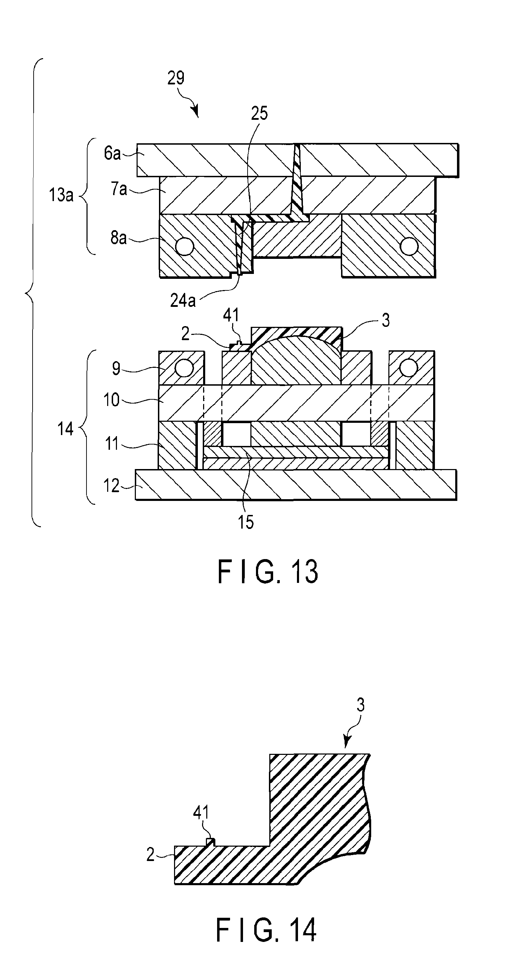

Thereafter, as shown in FIG. 12, the movable dies 14 move apart from the primary fixed die 13a and the secondary fixed die 13b, and the mold opening is carried out. At this time, as shown in FIG. 13, the primary compact 3 is designed to remain on the movable die plate 9. The primary compact 3 and the primary molding sprue 25 are disconnected from each other at a position of the pin point gate 24 simultaneously with the mold opening. The pin point gate 24a is provided in the molding surface 20a2 on the protruding portion 2 protruding toward the support member 4 side. Therefore, when disconnecting the primary compact 3 from the primary molding sprue 25, on the protruding portion 2 of the primary compact 3, a gate mark 41 as a mark of the pin point gate 24a remains at the position of the pin point gate 24a (see FIG. 14).

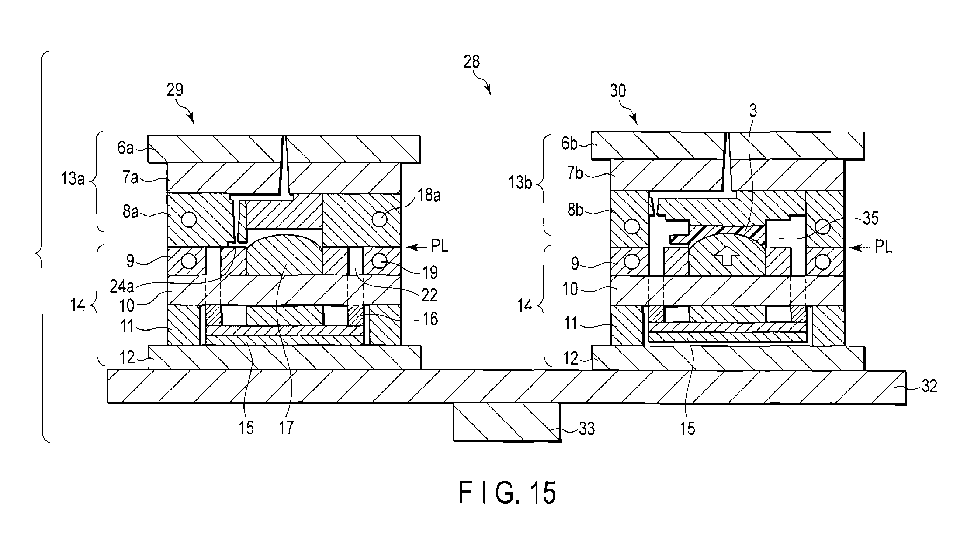

Then, the primary compact 3 remains on the movable die plate 9, and the movable platen 32 of the molding machine rotates 180° on the rotary shaft 33 in this state. As a result, the movable die 14 having the primary compact 3 mounted thereon is arranged to face the secondary fixed die 13b, and the movable die 14 having no primary compact 3 mounted thereon is arranged to face the primary fixed die 13a, and the dies are closed in this state (see FIG. 15).

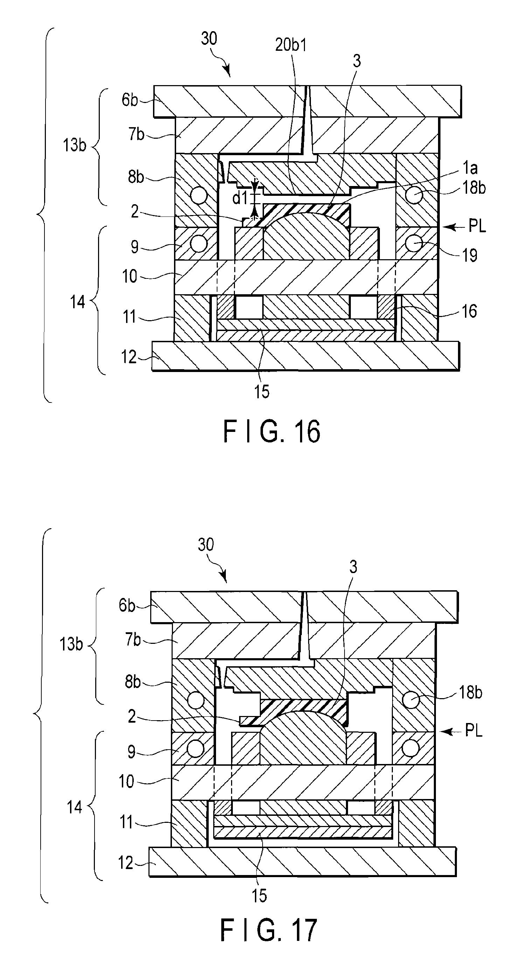

At this time, as shown in FIG. 16, the optical function surface 1a of the primary compact 3 mounted on the movable die plate 9 and the flat molding surface 20b1 of the secondary fixed die plate 8b are configured to form an interval d1 therebetween. In this state, the ejector plate 15 is protruded for a length corresponding to the interval d1 by a protruding mechanism (not shown) of the molding machine, and the ejector plate 15 presses the optical function surface 1a side toward the molding surface 20b1 in such a manner that the optical function surface 1a and the flat molding surface 20b1 are appressed against each other. At this time, as shown in FIG. 17, the protruding portion 2 moves away from the movable die plate 9, and a gap that the resin for the secondary molding enters is formed around the protruding portion 2.

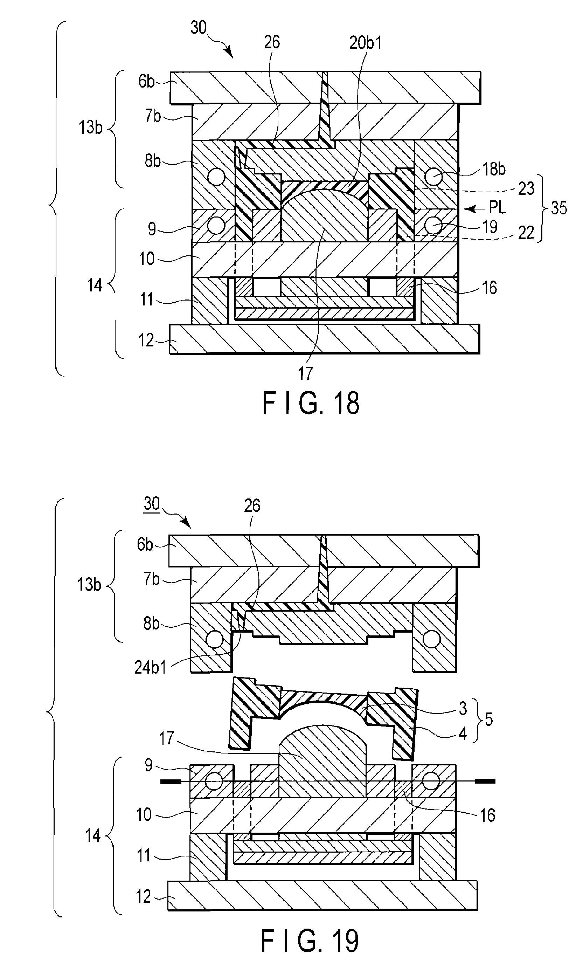

Then, the secondary molding process is performed as follows. As shown in FIG. 18, the secondary cavity 35 in the secondary molding die 30 is filled with a colored resin. The resin is maintained in a pressure keeping state under a predetermined pressure for a predetermined time. Subsequently, when the infilled resin is cooled, the support member 4 that supports the primary compact 3 can be obtained (the secondary molding is effected). At this time, the primary compact 3 and the support member 4 are integrated, and the protruding portion 2 as a part of the primary compact 3 is buried in the support member 4 (at the secondary molding step, the support member 4 is molded to bury the protruding portion 2). It is to be noted that, as the resin filling the secondary cavity 35, a general colored resin material such as polycarbonate colored in black is used. It is to be noted that, at the time of the secondary molding using this secondary molding die 30, the primary molding of the primary compact 3 is performed in the primary molding die 29 at the same time.

Then, the movable die 14 of the secondary molding die 30 is opened as shown in FIG. 19. At this time, at the pin point gate 24b1, the double molded article 5 is disconnected from the secondary molding sprue 26, and the movable insert 17 and the ejector pins 16 are protruded by the non-illustrated protruding mechanism of the molding machine, whereby the double molded article 5 on the movable die plate 9 of the secondary molding die 30 is taken out.

It is to be noted that, at the time of the mold opening of this secondary molding die 30, the mold opening is also performed in the primary molding die 29 at the same time, and the primary compact 3 is held in a state that the primary compact 3 is molded on the movable die plate 9 on the primary molding die 29 side. Subsequently, the above-described series of the primary molding step and the secondary molding step are repeated.

### (Functions)

In this embodiment, at the time of performing the primary molding of the primary compact 3 having the optical element 1 and the protruding portion 2 using the light transmissive molding material (the primary molding step), the protruding portion 2 that protrudes on the secondary compact side is molded on the primary compact 3. Further, at the time of the primary molding of the primary compact 3, in the supply of the molten material as the molding material into the primary cavity 34 of the primary molding die 29 for the primary compact 3, the molten material is supplied from the pin point gate 24a in the primary molding die 29 for the primary compact 3 into the primary cavity 34 of the primary molding die 29 for the primary compact 3 through the protruding portion 2. As a result, when the pin point gate 24a is disconnected from the optical element 1 subjected to the primary molding before effecting the secondary molding, the gate mark 41 is formed on the protruding portion 2 of the primary compact 3. It is to be noted that the pin point gate 24a is a supply path for the molten resin material formed in the primary molding die 29. At the time of the secondary molding in which the primary compact 3 is molded and the support member 4 (the secondary compact) that supports the primary compact 3 is adjacent to the primary compact 3 (the secondary molding step), this gate mark 41 is buried together with the protruding portion 2 in the molten material supplied into the secondary cavity 35 of the double molding die 28. Therefore, there is no possibility that the gate mark 41 remains on the optical function surfaces 1a and 1b of the optical element 1 of the double molded article 5 after the secondary molding. Accordingly, when the diameter D1 of the optical element 1 is very close, namely, substantially equal to the optical effective diameter D2 of the optical element 1, the optical element 1 and its support member 4 can be integrally molded without deteriorating functions of the optical element 1.

Furthermore, since the protruding portion 2 also has a function of further securely holding the optical element 1 on the support member 4, adhesive properties of the optical element 1 and the support member 4 can be improved. As a result, even when the diameter D1 of the optical element 1 is substantially equal to the optical effective diameter D2 of the optical element 1, a position at which the pin point gate 24a used for molding the optical element 1 is provided can be assured, and the secondary compact in which the primary compact 3 is integrated with the support member 4 can be manufactured.

### (Effects)

According to this embodiment, since the protruding portion 2 is formed outside the diameter D1 of the optical element 1 of the primary compact 3, the molding surface 20a2 in which the pin point gate 24a is configured can be arranged outside the optical effective diameter D2 of the optical element 1 and also arranged in a region associated with the secondary cavity 35 around the primary compact 3. As a result, since the gate mark 41 formed on the protruding portion 2 can be buried in the support member 4 which is subjected to the secondary molding at the subsequent secondary molding step, the gate mark 41 does not remain within the diameter D1 of the optical element 1 of the primary compact 3. Therefore, it is possible to obtain the optical element 1, whose diameter D1 is substantially equal to the optical effective diameter D2 of the optical element 1, integrally with the support member 40.

Moreover, according to this embodiment, the protruding portion 2 of the primary compact 3 is buried in the support member 4 that is subjected to the secondary molding. As a result, the support member 4 and the primary compact 3 can be appressed against each other through the protruding portion 2 over a wider area than that in the conventional example. Additionally, when an external force is applied to the optical element 1 from the thickness directions, an effect as a retainer can be obtained by the protruding portion 2 buried in the support member 4. Therefore, the joint strength of the primary compact 3 and the support member 4 that is subjected to the secondary molding can be improved.

It is to be noted that the protruding portion 2 has a sufficient size for configuring the pin point gate 24a, and a shape of this portion can be appropriately changed to, e.g., a rectangular or semicircular shape and can be changed to an arbitrary shape as required without being restricted to the shape of the protruding portion 2 according to the first embodiment.

Additionally, in this embodiment, the conformation having the one protruding portion 2 and the one pin point gate 24a is taken as an example, but the present invention is not restricted thereto. For example, if filling properties of the resin when molding the optical element 1 is insufficient and a surface accuracy of the optical element 1 cannot be assured since the one protruding portion 2 and the one pin point gate 24a are provided, two or more protruding portions 2 and two or more pin point gates 24a may be provided, and the filling properties of the resin and the surface accuracy of the optical element 1 can be thereby assured.

Further, in this embodiment, when a thickness of the protruding portion 2 is smaller than a thickness of the peripheral wall surface 1c, the primary compact 3 having the optical element 1 and the protruding portion 2 protruding from the optical element 1 and the double molded article 5 as the secondary compact which is the support member 4 can be integrally molded without deteriorating the functions of the optical element 1.

Furthermore, in this embodiment, since the protruding portion 2 is provided at a position excluding the optical function surfaces 1a and 1b as the functional portions of the primary compact 3, the optical element 1 and its support member 4 can be integrally molded without deteriorating the functions of the optical element 1.

### [Second Embodiment]

### (Configuration)

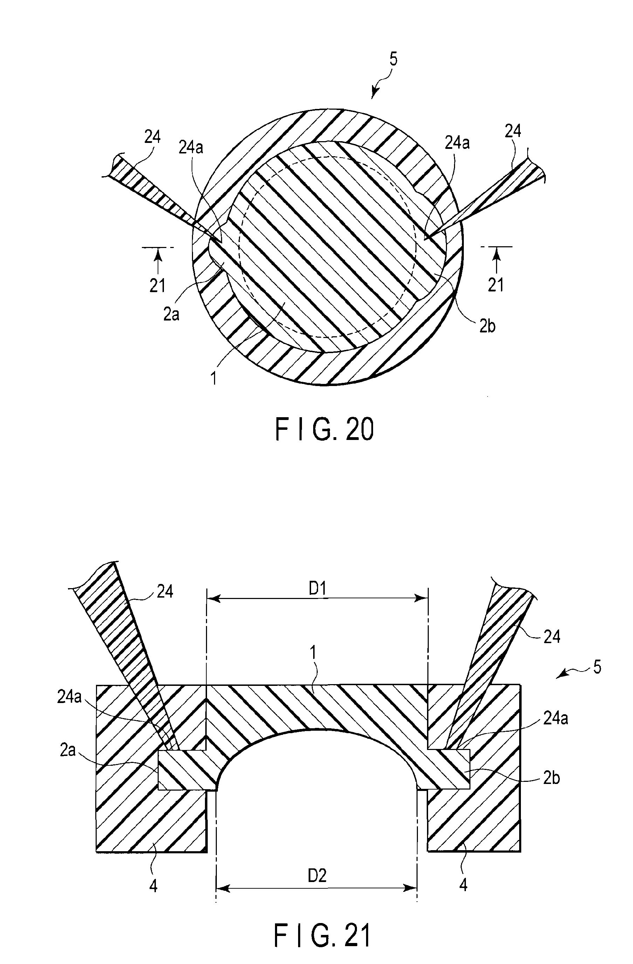

FIG. 20 and FIG. 21 show a second embodiment according to the present invention. In the first embodiment, one protruding portion 2 is provided at a part of the outer peripheral surface of the optical element 1 of the primary compact 3. In this embodiment, two protruding portions 2a and 2b are provided on an outer peripheral surface of an optical element 1 of a primary compact 3. The two protruding portions 2a and 2b are arranged to be 180° apart from each other in the circumferential directions of the optical element 1. Further, each of the two protruding portions 2a and 2b has a width sufficient to provide a pin point gate 24a which is required for molding the primary compact 3. It is to be noted that the two protruding portions 2a and 2b may have the same size or different sizes.

Thicknesses of the two protruding portions 2a and 2b are smaller than a thickness of a part of a support member 4, which is a secondary compact, adjacent to the optical element 1 in the thickness directions of the optical element 1. Furthermore, like the first embodiment, when the support member 4 as the secondary compact is subjected to secondary molding, the two protruding portions 2a and 2b are buried in the support member 4 as the secondary compact, and they are molded integrally with the optical element 1 in this state.

Moreover, two concave molding surfaces 20a2 used for molding the two protruding portions 2a and 2b of the primary compact 3 in a primary fixed die plate 8a and two primary molding sprues 24 are formed in a primary molding die 29 of a double molding die 28. Additionally, the pin point gate 24a is formed in each molding surface 20a2.

### (Effects/functions)

According to this embodiment, since the two protruding portions 2a and 2b are provided on the outer peripheral surface of the optical element 1 of the primary compact 3, a contact area of the two protruding portions 2a and 2b and the support member 4 can be increased beyond that in the first embodiment. Therefore, adhesive properties of the primary compact 3 and the support member 4 can be consolidated. Further, the two protruding portions 2a and 2b are arranged to be 180° apart from each other in the circumferential directions of the optical element 1. Therefore, when an external force is applied to the optical element 1 in the thickness directions, the two protruding portions 2a and 2b can make it harder for the optical element 1 to come off the support member 4.

It is to be noted that the present invention is not restricted to the configuration where the one protruding portion 2 of the primary compact 3 is provided (the first embodiment) or the configuration where the two protruding portions 2 of the same are provided (the second embodiment), and three or more protruding portions 2 may be provided.

### [Modification of Second Embodiment]

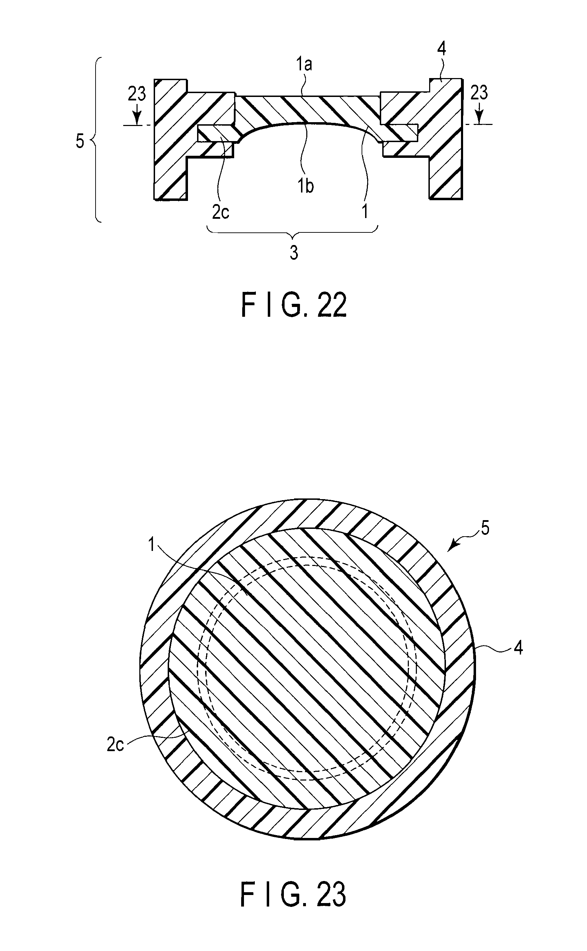

FIG. 22 and FIG. 23 show a modification of the second embodiment. In this modification, one flange-like protruding portion 2c is provided on the entire outer peripheral surface of an optical element 1 of a primary compact 3. Further, the protruding portion 2c has a width sufficient to provide a pin point gate 24a that is required for molding the primary compact 3. Furthermore, a thickness of the protruding portion 2c is smaller than a thickness of a part of a support member 4 adjacent to the optical element 1 in the thickness directions. Moreover, like the first embodiment, when the support member 4 as a secondary compact is subjected to secondary molding, the flange-like protruding portion 2c is buried in the support member 4.

Additionally, one non-illustrated concave molding surface 20a2 that is used for molding one flange-like protruding portion 2c of the primary compact 3 in a primary fixed die plate 8a and one primary molding sprue 24 are formed in a primary molding die 29 of a double molding die 28. Further, one pin point gate 24a is formed on the molding surface 20a2. It is to be noted that the primary molding sprue 24 and the pin point gate 24a are not necessarily restricted to one in number, and a plurality of primary molding sprues 24 or pin point gates 24a may be provided.

### (Effects/functions)

According to this embodiment, since one flange-like protruding portion 2c is provided on the entire outer peripheral surface of the optical element 1 of the primary compact 3, the primary compact 3 and the support member 4 come into contact with each other in a wider area than those in the first embodiment and the second embodiment. As a result, in addition to the effects of the first embodiment, adhesive properties of the primary compact 3 and the support member 4 can be further consolidated. Furthermore, like the first embodiment and the second embodiment, there is no possibility that hardness of removal with respect to an external force differs between a part of the outer peripheral surface of the optical element 1 where the protruding portion 2 is provided and a part of the outer peripheral surface of the optical element 1 where the protruding portion 2 is not provided in the primary compact 3.

### [Third Embodiment]

### (Configuration)

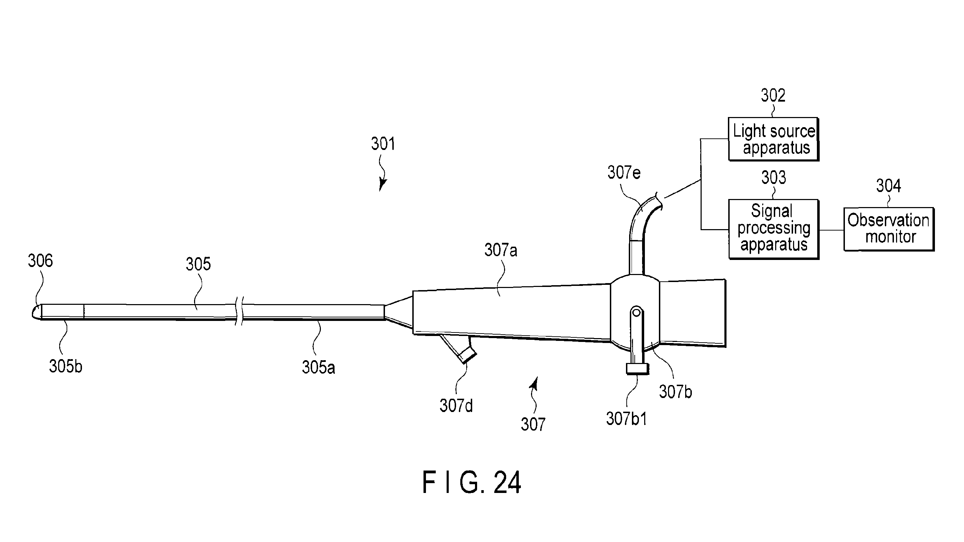

FIG. 24, FIG. 25A, FIG. 25B, FIG. 26, FIG. 27, FIG. 28, and FIG. 29 show a third embodiment according to the present invention. In this embodiment, the present invention is applied to a distal end portion 306 of an endoscope 301. FIG. 24 shows an entire configuration of the endoscope 301 which is used to observe a body cavity, give a diagnosis, and provide a medical treatment, etc. The endoscope 301 has an elongated and flexible insertion unit 305 which is inserted into a body cavity of a patient. The hard distal end portion 306 is arranged at a distal end of the insertion unit 305, and an operation unit 307 is provided at a proximal end of the insertion unit 305.

The insertion unit 305 has an elongated flexible tube portion 305a and a bending portion 305b coupled with a distal end of this flexible tube portion 305a. The distal end portion 306 is coupled with a distal end of this bending portion 305b. For example, in the bending portion 305b, non-illustrated bending pieces are arranged in a line along directions of a central axis (longitudinal axis directions) of the insertion unit 305, and the bending pieces adjacent to each other are pivotally fitted to rotate in the upward and downward directions by a shaft member. As a result, the bending portion 305b can bend in the up and down directions alone. The bending portion 305b may be configured to bend in four directions, i.e., not only the up and down directions but also left and right directions.

The operation unit 307 has a grip portion 307a and a bending mechanism portion 307b. It is to be noted that, in the case of a fiber scope using an image guide, a non-illustrated eyepiece portion is provided at a trailing-end portion of the operation unit 307. A lever type bending operation knob 307b1 is provided to the bending mechanism portion 307b. When the bending operation knob 307b1 of the operation unit 307 rotates, the bending portion 305b is forcibly bent in the up and down directions alone, and a direction of the distal end portion 306 is changed. Moreover, a channel mouth ring 307d is provided to the grip portion 307a.

One end of a universal cord 307e is coupled with a side surface of the bending mechanism portion 307b. A non-illustrated scope connector is provided at the other end of this universal cord 307e. The endoscope 301 is connected to a light source apparatus 302 and a signal processing apparatus 303 through this scope connector. An observation monitor 304 is connected to the signal processing apparatus 303.

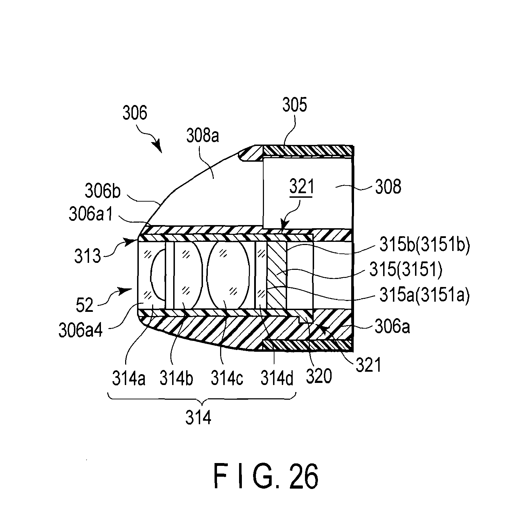

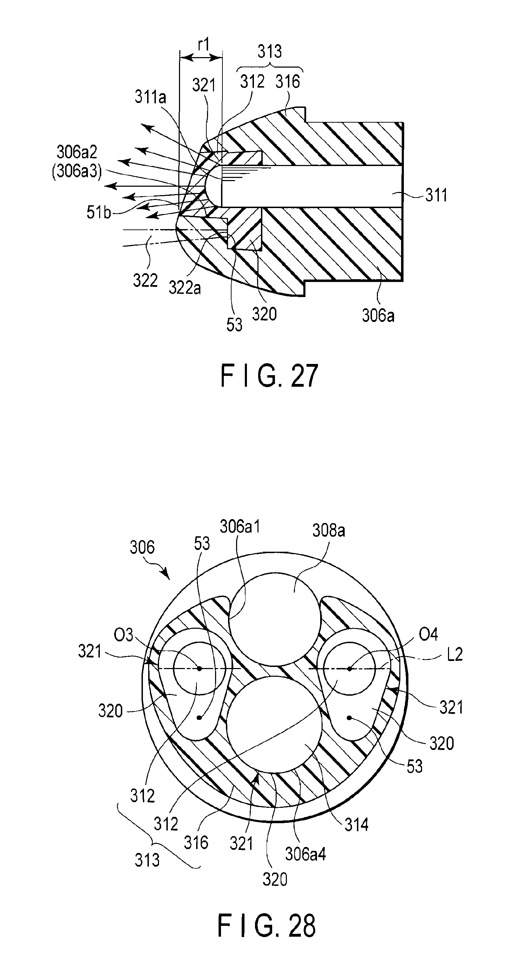

As shown in FIG. 26 and FIG. 27, the distal end portion 306 of the insertion unit 305 comprises a distal end portion main body (a distal end constituent portion) 306a as a single component. This distal end portion main body 306a is integrally molded using a resin. The resin as a material forming the distal end portion main body 306a is an optically opaque, e.g., black resin such as PC (polycarbonate). The distal end portion main body 306a is molded using a molding material different from a molding material of a later-described illumination lens (an optical element) 312, and it supports and is integrated with the illumination lens 312. The distal end portion main body 306a constitutes the distal end portion 306 of the endoscope 301. The resin as the material forming the distal end portion main body 306a is the optically opaque, e.g., black resin. Therefore, the distal end portion main body 306a is a light-blocking member that blocks transmission of light.

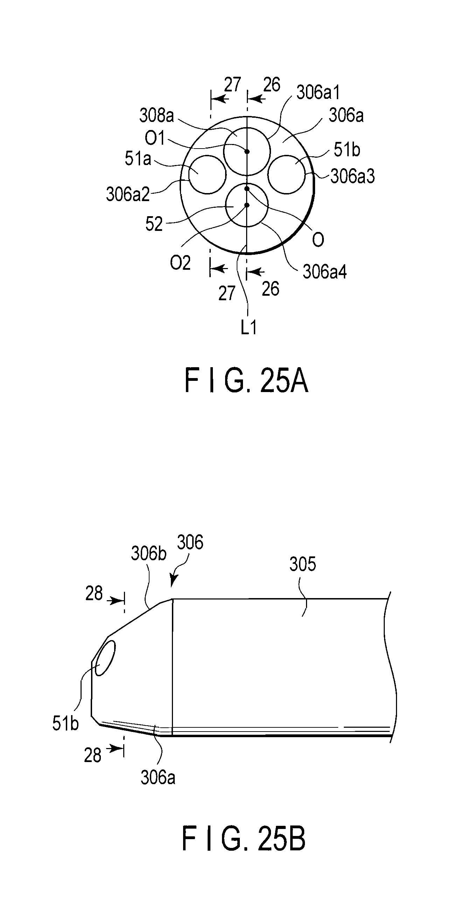

As shown in FIG. 25A, two illumination window portions 51a and 51b from which illumination light exits, one observation window portion 52 (the optical element), and one distal end opening portion 308a of a treatment tool insertion channel 308 are provided on an distal end surface of the distal end portion main body 306a. In this embodiment, as shown in FIG. 25A, the distal end opening portion 308a is arranged on the upper side of a central position O of the distal end surface of the distal end portion main body 306a, and the observation window portion 52 is arranged on the lower side of the central position O. Further, a reference line connecting a center line O1 of the distal end opening portion 308a with a center line 02 of the observation window portion 52 is determined as a reference line L1. The two illumination window portions 51a and 51b are arranged to be horizontally symmetrical with the reference line L1 at the center.

Furthermore, as shown in FIG. 25B, a tapered inclined surface 306b that tapers toward the distal end side is formed on an outer peripheral surface on the upper surface side (the end opening portion 308a side) of the distal end portion main body 306a. As a result, the distal end surface of the distal end portion main body 306a has a shape that is horizontally long and vertically flat. In other words, the distal end surface of the distal end portion main body 306a is a spatula portion having a substantially elliptic shape that has a minor axis in the vertical directions and a major axis in the horizontal directions. An outer peripheral surface of the distal end portion main body 306a is smooth. The outer peripheral surface of the distal end portion main body 306a does not have precipitous corners or sharp irregularities from the edge of the distal end surface to the outer periphery of the rear end portion of the distal end portion main body 306a. Specifically, the entire outer peripheral surface of the distal end portion main body 306a is a curved surface that is continuous from the edge of the substantially elliptic distal end surface to the substantially circular outer peripheral surface of the rear proximal end portion of the distal end portion main body 306a. The outer peripheral surface of the distal end portion main body 306a is a smooth curved surface that changes from the substantially elliptic shape to the substantially circular shape in from the edge of the substantially elliptic distal end surface to the bending portion 305b with the substantially circular cross section that is adjacently disposed at the rear end of the distal end portion 306.

As shown in FIG. 26, the inclined surface 306b on the upper surface side of the distal end portion main body 306a is arranged in a direction that the bending portion 305b bends, i.e., the side along which the distal end portion 306 rises in this example. A rounded edge is formed at each of the peripheral edge of the distal end surface of the distal end portion main body 306a and a corner portion exposed to the outside of the distal end portion main body 306a.

As shown in FIG. 25A, four holes (306a1, 306a2, 306a3, 306a4) are formed in the distal end portion main body 306a in parallel to the axial directions of the insertion unit 305. In the first hole 306a1, the end opening portion 308a of the channel 308 is formed. In the second hole 306a2 and the third hole 306a3, a pair of left and right illumination accommodating holes in which assembled members of an illumination optical system are disposed are formed. In the fourth hole 306a4, an observation hole in which an assembled member of an observation optical system is disposed is formed.

A non-illustrated channel tube is connected to an inner end of the first hole (a channel hole) 306a1 forming the distal end opening portion 308a of the channel 308 through a connection mouth ring. An operator's hand side of this channel tube is led to the operation unit 307 through the inside of the bending portion 305b and the inside of the flexible tube portion 305a, and it is connected to the channel mouth ring 307d. Furthermore, the channel tube forms the channel 308 that pierces the distal end opening portion 308a of the distal end portion 306 from the channel mouth ring 307d. This channel 308 is used for not only insertion of a treatment tool but also air supply/water supply and other functions.

As shown in FIG. 26, in the fourth hole (the observation hole) 306a4 in which the assembled member of the observation optical system is disposed, a first lens 314a that forms the observation window portion 52 as the optical element at the most distal end position is arranged. The first lens 314a may be cover glass. At the rear of this first lens 314a, a second lens 314b, a third lens 314c, and a fourth lens 314d are sequentially arranged. These lenses form an observation optical system 314. This observation optical system 314 is fixed on an inner peripheral wall surface of the fourth hole 306a4 of the distal end portion main body 306a through, e.g., an adhesive. At an image forming position of the observation optical system 314, an imaging element unit 315 having an imaging element such as a CCD is arranged.

Moreover, an observation image formed by the observation optical system 314 is converted into an electrical signal by the imaging element unit 315 and transmitted to the signal processing apparatus 303 through a non-illustrated signal cable. Additionally, the observation image is converted into a video signal by the signal processing apparatus 303 and output to the observation monitor 304.

In this case, as shown in FIG. 26, the observation window 52 is arranged on the distal end side than an incidence end surface 315a of the imaging element unit 315. A protruding portion 320 is arranged on the proximal end side than a proximal end 315b of the imaging element unit 315. The protruding portion 320 and the observation window 52 are integrally formed as an optical component 321 from the hole 306a4 at a primary molding step using a primary molding die 29.

It is to be noted that a distal end of an image guide fiber 3151 may be fixed in place of the imaging element unit 315. In this case, an observation image formed by the observation optical system 314 is led to an eyepiece portion 307c through the image guide fiber 3151 and observed by the eyepiece portion 307c.

In this case, as shown in FIG. 26, the observation window 52 is arranged on the distal end side than an incidence end surface 3151a of the image guide fiber 3151. The protruding portion 320 is arranged on the proximal end side than a proximal end 3151b of the image guide 3151.

As shown in FIG. 27, in the second hole (the illumination accommodating hole) 306a2 and the third hole (the illumination accommodating hole) 306a3 of the distal end portion main body 306a, the illumination lenses (the optical elements) 312 forming the illumination window portions 51a and 51b are arranged at the most distal end positions. The illumination lenses 312 are molded using a light transmissive molding material, and they are the optical elements. The illumination lenses 312 are supported by a support member 316. The support member 316 is the distal end portion main body 306a, and it is a secondary compact. In this embodiment, each illumination lens 312 and the distal end portion main body 306a (the support member 316) are integrally formed by double molding, thereby forming a double molded article (a resin molded article). An distal end portion of a light guide 311 is coupled with the illumination lens 312.

In the double molded article 313 according to this embodiment, each illumination lens 312 is made of a resin for an optical component, which is an optically transparent resin, e.g., PC (polycarbonate). Additionally, the distal end portion main body 306a as the support member 316 is made of an optically opaque, e.g., black resin such as PC (polycarbonate). Further, the illumination lens 312 and the distal end portion main body 306a are formed by injection molding based on double molding, namely, the illumination lens 312 and the distal end portion main body 306a are integrally formed in two molding steps, i.e., performing primary molding of the illumination lens 312 and then carrying out secondary molding of the distal end portion main body 306a. Since the distal end portion main body 306a as the support member 316 is optically opaque, it prevents unnecessary light from scattering from the outer peripheral portion of the illumination lens 312.

Furthermore, as shown in FIG. 27 and FIG. 28, in this embodiment, the protruding portion 320 is provided at a part of the outer peripheral surface of the illumination lens 312. Moreover, the illumination lens 312 and the protruding portion 320 are integrally formed as the optical component 321 at the primary molding step using the primary molding die 29. The optical component 321 is a primary compact. To provide a primary molding pin point gate 322a through which a molding material of the illumination lens 312 is supplied into a cavity of a molding die for the illumination lens 312, the protruding portion 320 is provided to protrude from the illumination lens 312 toward the distal end portion main body 306a side.

Each protruding portion 320 is placed at a position where it does not interfere with other holes (the first hole (the channel hole) 306a1 and the fourth hole 306a4) in the distal end portion main body 306a of the double molded article 313 as shown in FIG. 28, and it is arranged at a place which is out of an optical effective range r1 of the illumination lens 312 as the optical element as shown in FIG. 27. That is, the protruding portion 320 is extended on the rear side of a region (a range) represented by the optical effective range r1 of the illumination lens 312. The optical effective range r1 of the illumination lens 312 is arranged along the axial directions of the distal end portion main body 306a. Here, the optical effective range r1 of the illumination lens 312 is a portion that is arranged on the distal end side than an exit end surface 311a of the light guide 311. As a result, diffused reflection caused by entrance of light with respect to the protruding portion 320 can be avoided, and optical performance of the double molded article 313 is not jeopardized by this protruding portion 320.

A manufacturing method of the double molded article 313 is basically substantially the same as that of the first embodiment. Differences from the first embodiment will be mainly described hereinafter.

In this embodiment, the two illumination lenses 312 and the protruding portions 320 must be integrally molded as the optical components 321 by the primary molding. Therefore, the respective protruding portions 320 of the two illumination lenses 312 are downwardly vertically extended in FIG. 28 with respect to a line L2 connecting respective center lines 03 and 04 of the two illumination lenses 312 as shown in FIG. 28. Further, in a primary fixed die of the primary molding die, such a primary molding sprue 322 and a primary pin point gate 322a as shown in FIG. 27 are arranged. The primary molding sprue 322 and the primary molding pin point gate 322a are arranged at positions associated with an extended end portion of each protruding portion 320 of the optical component 321.

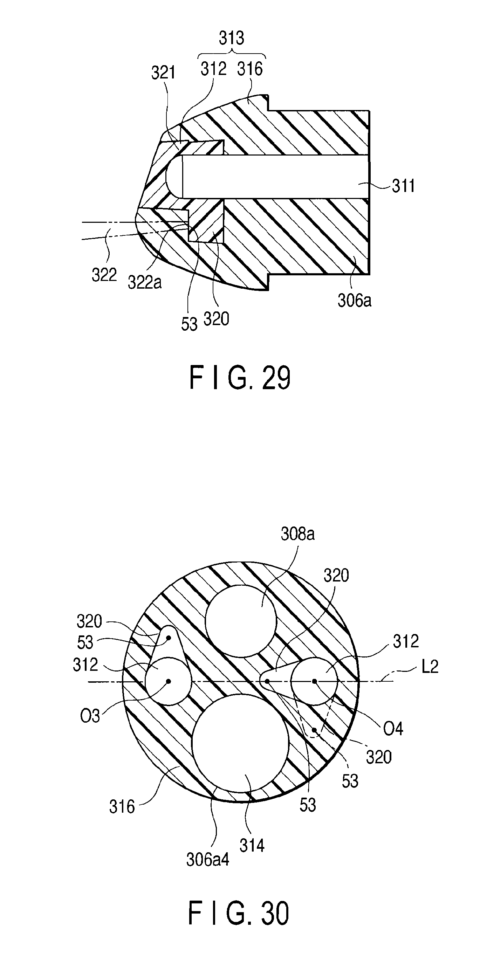

With such a configuration, in the primary molding using the primary molding die, after each illumination lens 312 is molded, the primary molding pin point gate 322a and each protruding portion 320 are disconnected by a mold opening operation of the primary molding die like the first embodiment. When the primary molding pin point gate 322a is disconnected from the protruding portion 320, in the protruding portion 320, a gate mark 53 as a small irregularity remains at a position of the primary molding pin point gate 322a (see FIG. 28). When the distal end portion main body 306a as the support member 316 is formed in the secondary molding, this gate mark 53 is buried and hidden in the distal end portion main body 306a. FIG. 29 shows a state that the gate mark 53 on each protruding portion 320 of the optical component 321 is buried and hidden in the distal end portion main body 306a which is the support member 316 when forming the distal end portion main body 306a as the support member 316 in the secondary molding. Therefore, the gate mark 53 on each protruding portion 320 of the optical component 321 does not affect a product function.

Subsequently, like the first embodiment, the optical component 321 having the integrally molded illumination lenses 312 and protruding portions 320 is held by a non-illustrated movable die, and a non-illustrated injection molding machine rotates a rotary shaft and rotates a non-illustrated movable platen 180° in this state. As a result, the movable die 14 having the optical component 321 mounted thereon and a secondary fixed die 13b of a secondary molding die 30 are arranged to face each other. In this state, the secondary molding of the distal end portion main body 306a as the support member 316 is carried out around the illumination lens 312 of the optical component 321 by the secondary molding die 30 and, at the same time, the illumination lenses 312 and the distal end portion main body 306a as the support member 316 are integrated, thereby obtaining the double molded article 313 as shown in FIG. 29.

It is to be noted that, in this embodiment, the illumination lenses 312 and the distal end portion main body 306a as the support member 316 are integrally molded as the double molded article 313, but the present invention is not restricted thereto. For example, the first lens 314a of the observation optical system 314 and the distal end portion main body 306a as the support member 316 may be integrally molded based on the double molding. Alternatively, both the illumination lenses 312 and the first lens 314a of the observation optical system 314 may be integrally molded with the distal end portion main body 306a as the support member 316 based on the double molding.

### (Functions/effects)

According to this embodiment, in the distal end portion 306 of the endoscope 301, each protruding portion 320 is provided outside the optical effective diameter of each illumination lens 312 and at a part of the outer peripheral surface of the illumination lens 312 to avoid interference with the support member 316 or any other member. Here, the protruding portion 320 is arranged on the proximal end side of the light guide 311 than the exit end surface 311a of the light guide 311. Further, the exit end surface 311a of the light guide 311 is arranged on the proximal end side than the illumination lens 312. As a result, light exiting from the light guide 311 does not scatter on the protruding portion 320, excellent illumination light can be obtained, functions of the distal end portion 306 of the endoscope 301 are not deteriorated, and the two illumination lenses 312 and the distal end portion main body 306a as the support member 316 for these lenses can be integrally molded, thereby suppressing a manufacturing cost. Furthermore, the two illumination lenses 312 and the distal end portion main body 306a as the support member 316 are integrally molded based on the double molding, whereby the entire distal end portion 306 of the endoscope 301 can be miniaturized.

Moreover, since the gate mark 53 of the primary molding pin point gate 322a in the primary molding is buried and hidden in the support member 316 when forming the support member 316 in the secondary molding, the gate mark 53 is not exposed on the external surface of the distal end portion 306 of the double molded article 313. Additionally, since the two illumination lenses 312 and the distal end portion main body 306a as the support member 316 are integrally molded based on the double molding, adhesive properties of the two illumination lenses 312 and the distal end portion main body 306a can be improved. Further, each protruding portion 320 of the optical component 321 also has a function of further assuredly holding each illumination lens 312 in the distal end portion main body 306a. Therefore, the adhesive properties of the distal end portion main body 306a and the illumination lenses 312 can be improved.

As described above, in this embodiment, the illumination lenses 312, the protruding portions 320, the optical components 312, the distal end portion main body 306a, the support member 316, and the double molded article 313 are formed by the method shown in FIG. 1A, FIG. 1B, FIG. 1C, FIG. 1D, and FIG. 2 to FIG. 19.

Furthermore, in this embodiment, at the time of manufacturing the double molded article 313 (a resin molded article) for the endoscope 301, which is the distal end portion main body (a distal end constituent portion) 306a constituting the distal end portion 306 of the endoscope 301, each protruding portion 320 provided to the illumination lens 312 is coupled with the primary molding pin point gate 322a for supplying the molten material. As a result, in this embodiment, at the time of molding each illumination lens 312, the molten material as the molding material of the illumination lens 312 can be supplied into a cavity of the molding die for the illumination lens 312 from the primary molding pin point gate 322a through the protruding portion 320.

Additionally, in this embodiment, when each protruding portion 320 is provided at a position outside the optical effective range (r1) of the illumination lens 312, the optical component 321 having the illumination lens 312 and the protruding portion 320 protruding from the illumination lens 312 and the distal end constituent portion 306a as the support member 316 can be integrally molded without deteriorating the function of the optical component 321 for the endoscope 301.

Further, in this embodiment, the protruding portion 320 is arranged on the proximal end side of the light guide 311 than the exit end surface 311a of the light guide 311, and hence illumination light exiting the light guide 311 is not reflected in a diffused manner on the protruding portion 320 of the illumination lens 312. Therefore, in this embodiment, the optical component 321 having the illumination lens 312 and the protruding portion 320 protruding from the illumination lens 312 and the distal end constituent portion 306a as the support member 316 can be integrally molded without deteriorating the function of the illumination lens 312.

Furthermore, the incidence end surface 3151a of the image guide fiber 3151 is arranged on the proximal end side than the observation window 52, and the protruding portion 320 is arranged on the proximal end 3151b side of the image guide fiber 3151. As a result, in this embodiment, incident light (an endoscopic image) that enters the image guide fiber 3151 from the observation window 52 is not adversely affected by diffused reflection or the like on the protruding portion 320 of the observation window 52. Therefore, in this embodiment, the optical component 321 having the observation window 52 and the protruding portion 320 protruding from the observation window 52 and the distal end constituent portion 306a as the support member 316 can be integrally molded without deteriorating the function of the observation window 52.

Moreover, in this embodiment, the incidence end surface 315a of the imaging element unit 315 as the imaging unit is arranged on the proximal end side than the observation window 52, and the protruding portion 320 is arranged on the proximal end 315b side of the imaging element unit 315. As a result, in this embodiment, incident light (the endoscopic image) that enters the imaging element unit 315 as the imaging unit from the observation window 52 is not adversely affected by diffused reflection or the like on the protruding portion of the optical element. Therefore, in this embodiment, the optical component 321 having the observation window 52 and the protruding portion 320 protruding from the observation window 52 and the distal end constituent portion 306a as the support member 316 can be integrally molded without deteriorating the function of the observation window 52.

Additionally, in this embodiment, the distal end portion main body 306a is molded using a molding material different from that of the illumination lens (the optical element) 312 and formed into the light blocking member, whereby scattering of light can be avoided.

### [Modification of Third Embodiment]

FIG. 30 shows a modification of the third embodiment. This modification is obtained by changing the arrangement of the illumination lens 312 and the protruding portion 320 which are subjected to the primary molding in an integral manner as the optical component 321 in the third embodiment. That is, in this modification, as shown in FIG. 30, a diameter of a fourth hole (an observation hole) 306a4 in which an assembled member of an observation optical system 314 on the lower side in the drawing is disposed is larger than a diameter of an end opening portion 308a of a channel 308 on the upper side in the drawing. In this case, one of the protruding portions 320 of the illumination lenses 312 is upwardly vertically extended in FIG. 30 with respect to a line L2 that connects respective center lines 03 and 04 of the two illumination lenses 312. The other of the protruding portions 320 of the illumination lenses 312 is extended toward a center line position of a distal end portion main body 306a as a support member 316 of the illumination lens 312, for example. In each protruding portion 320, when a primary molding pin point gate 322a is disconnected from the protruding portion 320, a gate mark 53 as a small irregularity remains at a position of the primary molding pin point gate 322a (see FIG. 30). When the distal end portion main body 306a as the support member 316 is formed in the secondary molding, this gate mark 53 is buried and hidden in the distal end portion main body 306a as the support member 316, and hence a product function is not affected.

As described above, in this modification, the illumination lenses 312 and the protruding portions 320 may be adequately arranged in accordance with an arrangement state of each constituent element of the double molded article 313 in the distal end portion 306 of the endoscope 301 according to the third embodiment. Further, in this modification, the protruding portions 320 may be provided around the illumination lens 312, or the protruding portion 320 may be provided on the entire circumference. Furthermore, as indicated by a virtual line in FIG. 30, the protruding portion 320 may be extended in the circumferential directions along a shape of the outer periphery of the distal end portion main body 306a.

### [Fourth Embodiment]

### (Configuration)

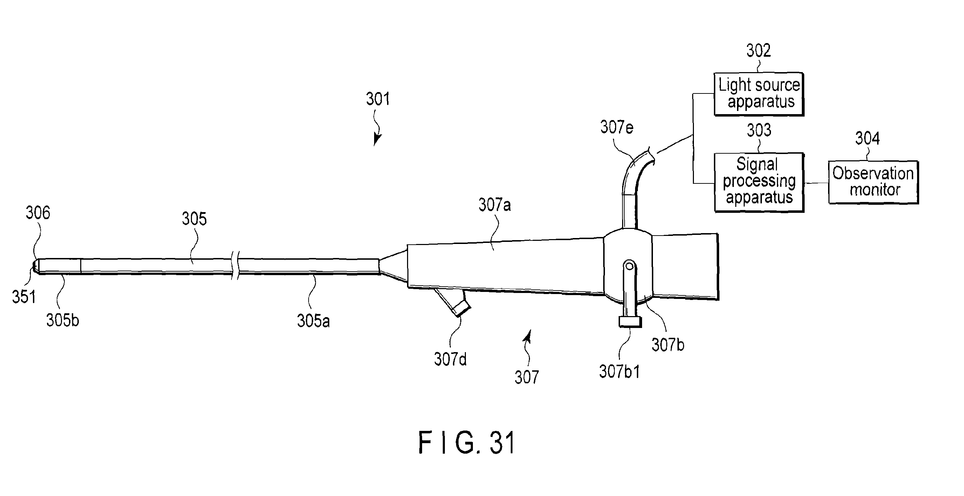

FIG. 31, FIG. 32A, FIG. 32B, FIG. 33, FIG. 34, FIG. 35, and FIG. 36 show a fourth embodiment according to the present invention. In this embodiment, a direct-view-type distal end portion main body 351 as a single component is provided at the distal end portion 306 of the endoscope 301 according to the third embodiment. It is to be noted that portions other than the distal end portion main body 351 have the same structures as those in the endoscope 301 according to the third embodiment, like reference numerals denote parts equal to those of the endoscope 301 in the first embodiment, and a detailed description on such parts will be omitted.

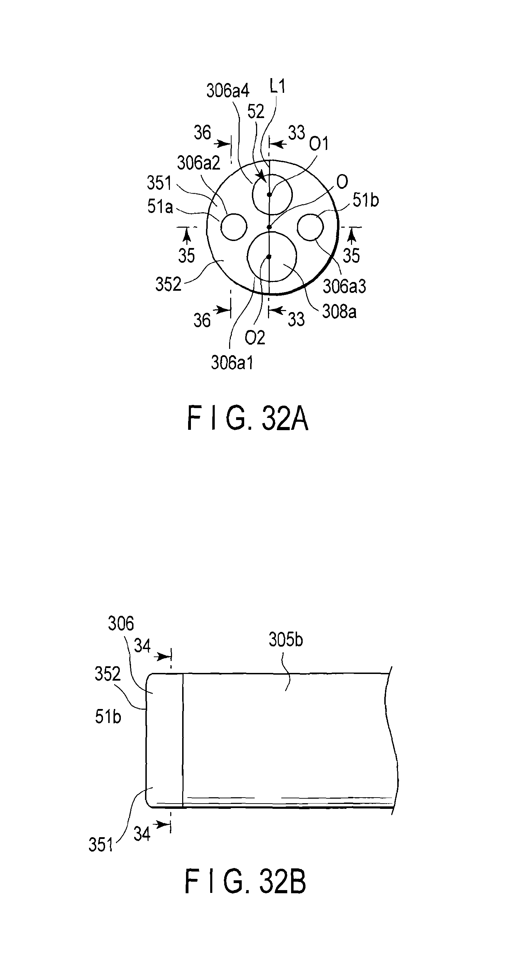

As shown in FIG. 32A and FIG. 32B, an end surface 352 of the direct-view-type distal end portion main body 351 according to this embodiment is formed into a flat surface orthogonal to the axial directions of an insertion unit 305. In this distal end surface 352, an observation window 52 is arranged on the upper side with respect to a central position O of the end surface 352, and a distal end opening portion 308a of a channel for treatment tool insertion is arranged on the lower side with respect to the central position O. Further, two illumination window portions 51a and 51b are arranged in such a manner that they are placed at left and right symmetrical positions with a reference line L1, which connects a center line 02 of the distal end opening portion 308a with a central line O1 of the observation window 52, at the center.

As shown in FIG. 32A, four holes (306a1, 306a2, 306a3, 306a4) are formed in the distal end portion main body 351 in parallel to the axial directions of the insertion unit 305. In the first hole 306a1, the end opening portion 308a of the channel 308 is formed. In the second hole 306a2 and the third hole 306a3, a pair of left and right illumination accommodating holes in which assembled members of an illumination optical system are disposed are formed. In the fourth hole 306a4, an observation hole in which an assembled member of an observation optical system is disposed is formed.

A non-illustrated channel tube is connected to an inner end of the first hole (a channel hole) 306a1 forming the distal end opening portion 308a of the channel 308 through a connection mouth ring. An operator's hand side of this channel tube is led to an operation unit 307 through the inside of a bending portion 305b and the inside of a flexible tube portion 305a, and it is connected to a channel mouth ring 307d. Furthermore, the channel tube forms the channel 308 that pierces the distal end opening portion 308a of the distal end portion 306 from the channel mouth ring 307d. This channel 308 is used for not only insertion of a treatment tool but also air supply/water supply and other functions.

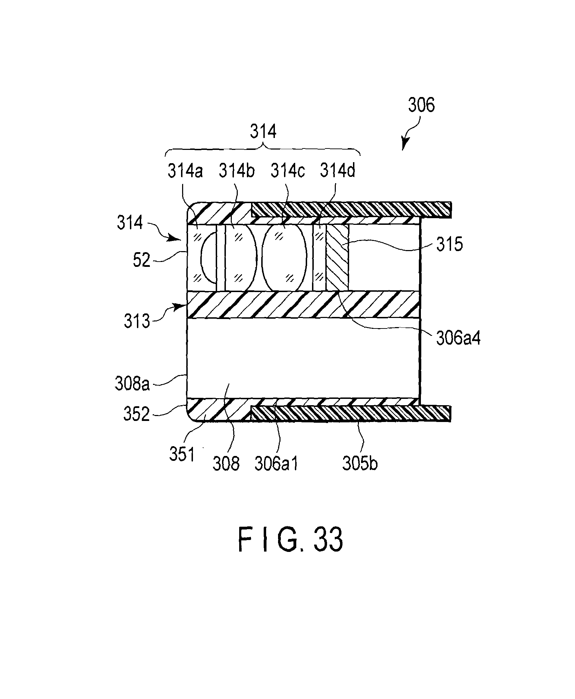

As shown in FIG. 33, in the fourth hole (the observation hole) 306a4 in which the assembled member of the observation optical system is disposed, a first lens 314a that forms the observation window portion 52 at the most distal end position is arranged. The first lens 314a may be cover glass. At the rear of this first lens 314a, a second lens 314b, a third lens 314c, and a fourth lens 314d are sequentially arranged. These lenses form an observation optical system 314. This observation optical system 314 is fixed on an inner peripheral wall surface of the fourth hole 306a4 of the distal end portion main body 351 through, e.g., an adhesive. At an image forming position of the observation optical system 314, an imaging element unit 315 having an imaging element such as a CCD is arranged.

Moreover, an observation image formed by the observation optical system 314 is converted into an electrical signal by the imaging element unit 315 and transmitted to a signal processing apparatus 303 through a non-illustrated signal cable. Additionally, the observation image is converted into a video signal by the signal processing apparatus 303 and output to an observation monitor 304. It is to be noted that an end of an image guide fiber may be fixed in place of the image element unit 315. In this case, the observation image formed by the observation optical system 314 is led to an eyepiece portion 307c through the image guide fiber and observed by the eyepiece portion 307c.

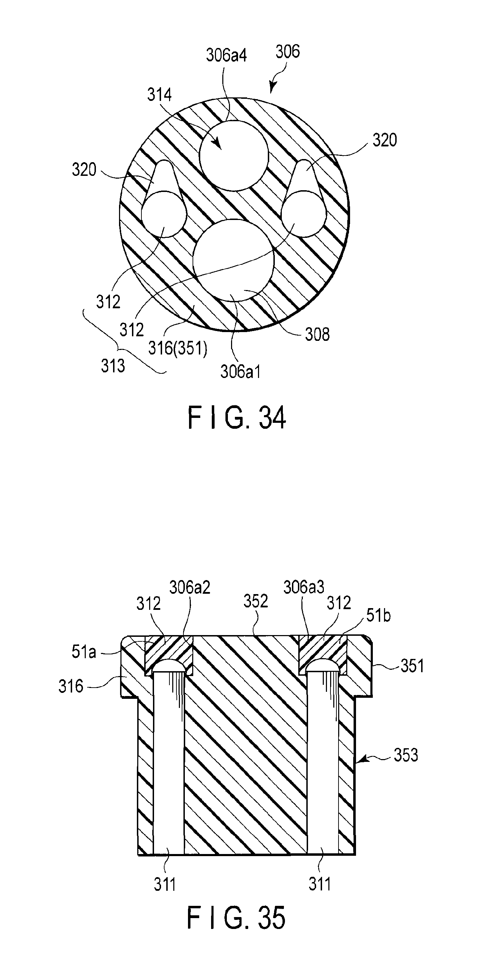

It is to be noted that, as shown in FIG. 34, in this embodiment, the illumination lens 312 and the distal end portion main body 351 (the support member 316) are integrally formed by double molding like the third embodiment, and a double molded article (a resin molded article) is thereby formed. FIG. 34 is a cross-sectional view taken along a line 34-34 in FIG. 32B.

As shown in FIG. 35, in the second hole (the illumination accommodating hole) 306a2 and the third hole (the illumination accommodating hole) 306a3 of the distal end portion main body 306a, the illumination lenses 312 forming the illumination window portions 51a and 51b are arranged at the most distal end positions. The illumination lenses 312 are the optical elements. The illumination lenses 312 are supported by the support member 316. The support member 316 is the distal end portion main body 351, and it is a secondary compact. In this embodiment, each illumination lens 312 and the distal end portion main 351 are integrally formed, thereby forming a double molded article 353 (a resin molded article).

In the double molded article 353 according to this embodiment, each illumination lens 312 is made of a resin for an optical component, which is an optically transparent resin, e.g., PC (polycarbonate). Additionally, the support member 316 is made of an optically opaque, e.g., black resin such as PC (polycarbonate). Further, the illumination lens 312 and the distal end portion main body 351 are formed by injection molding based on double molding, namely, the illumination lens 312 and the distal end portion main body 351 are integrally formed at molding steps, i.e., performing primary molding of the illumination lens 312 and then carrying out secondary molding of the distal end portion main body 351 as the support member 316. Since the support member 316 is optically opaque, it prevents unnecessary light from scattering from the outer peripheral portion of the illumination lens 312.

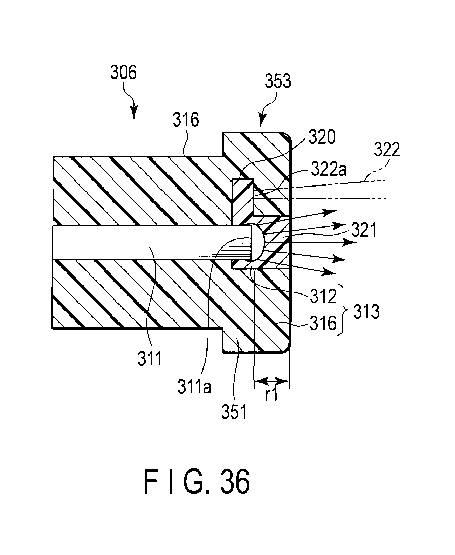

Furthermore, as shown in FIG. 35 and FIG. 36, in this embodiment, a protruding portion 320 is provided at a part of the outer peripheral surface of the illumination lens 312. Moreover, the illumination lens 312 and the protruding portion 320 are integrally formed as an optical component 321 at the primary molding step using a primary molding die 29. The optical component 321 is a primary compact.

Each protruding portion 320 is placed at a position where it does not interfere with other holes (the first hole (the channel hole) 306a1 and the fourth hole 306a4) in the distal end portion main body 351 of the double molded article 353 as shown in FIG. 36, and it is arranged at a place which is out of an optical effective range r1 of the illumination lens 312 as shown in FIG. 27. That is, the protruding portion 320 is extended on the rear side of the optical effective range r1 of the illumination lens 312. The optical effective range r1 of the illumination lens 312 is arranged along the axial directions of the distal end portion main body 351. As a result, functions of the double molded article 313 are not jeopardized by this protruding portion 320.

A manufacturing method of the double molded article 353 is the same as that according to the third embodiment.

### (Functions/effects)

According to this embodiment, in the direct-view-type distal end portion of the endoscope 301, each protruding portion 320 is provided outside the optical effective diameter of each illumination lens 312 to avoid interference with the support member 316 or any other member. Further, this protruding portion 320 is provided on a part of the outer peripheral surface of the illumination lens 312. As a result, like the third embodiment, functions of the distal end portion 306 of the endoscope 301 are not deteriorated, and the two illumination lenses 312 and the distal end portion main body 351 as the support member 316 can be integrally molded, thereby suppressing a manufacturing cost. Furthermore, the two illumination lenses 312 and the distal end portion main body 351 as the support member 316 are integrally molded based on the double molding, whereby the entire distal end portion 306 of the endoscope 301 can be miniaturized.

Moreover, since a gate mark 53 of a primary molding pin point gate 322a in the primary molding is buried and hidden in the support member 316 when forming the support member 316 in the secondary molding, the gate mark 53 is not exposed on the external surface of the distal end portion 306 of the double molded article 353. Since irregularities on the external surface formed due to the gate mark 53 at the time of the primary molding can be eliminated, an operation, e.g., scraping away the gate mark 53 in post-processing is no longer required. Additionally, each protruding portion 320 of the optical component 321 also has a function of retaining each illumination lens 312, and hence the illumination lens 312 can be assuredly held by the distal end portion main body 351.

As described above, in this embodiment, the illumination lenses 312, the protruding portions 320, the optical components 321, the distal end portion main body 351, the support member 316, and the double molded article 313 are formed by the method shown in FIG. 1A, FIG. 1B, FIG. 1C, FIG. 1D, and FIG. 2 to FIG. 19.

### [Modification 1]

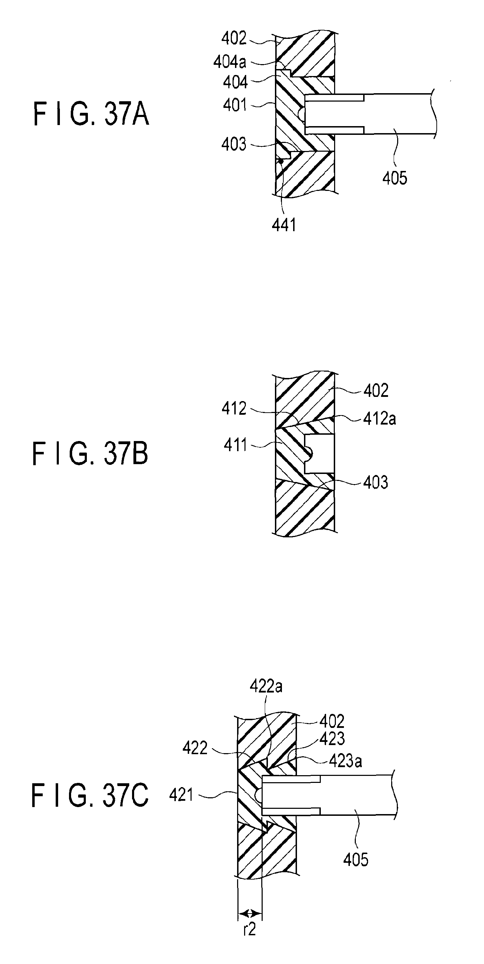

FIG. 37A shows Modification 1 of a fixing method for fixing, e.g., an endoscopic lens 401 including an illumination lens and an objective lens. For example, at a distal end portion 306 of an endoscope 301 depicted in FIG. 31, a distal end cover 402 is arranged. In this distal end cover 402, an attachment hole 403 in which the endoscopic lens 401 is attached is provided.

Further, the endoscopic lens 401 is formed of a transparent resin lens. On an outer peripheral surface of a distal end portion of this endoscopic lens 401, a protruding portion 404 that protrudes toward the outer side is provided. The protruding portion 404 is formed into a ring-like shape on the entire outer peripheral surface of the end portion of the endoscopic lens 401. A gate mark 441 is formed on, e.g., an end surface 404a of the protruding portion 404 in a protruding direction. It is to be noted that FIG. 37A shows an example that the endoscopic lens 401 is applied to an illumination lens. A distal end portion of a light guide 405 is coupled with this endoscopic lens 401.

The distal end cover 402 is integrally molded using an optically opaque, e.g., black resin such as PC (polycarbonate).

In this modification, the endoscopic lens 401 and the distal end cover 402 are integrally molded using a double molded article as a resin molded article. Here, the endoscopic lens 401 is subjected to primary molding using a primary molding die of a double molding die. Then, around the endoscopic lens 401 as a primary compact, the distal end cover 402 is subjected to secondary molding using a secondary molding die of the double molding die.

Furthermore, in this modification, at the time of performing the secondary molding of the distal end cover 402 using the secondary molding die of the double molding die, a peripheral edge region of the endoscopic lens 401 is integrated with a peripheral wall of the attachment hole 403 of the distal end cover 402 by thermal welding, whereby the double molding is effected. At this time, a volume (a heat capacity) of the protruding portion 404 of the endoscopic lens 401 is smaller than a volume (a heat capacity) of a main body portion of the endoscopic lens 401. Therefore, not only the surface but the inside of the protruding portion 404 is apt to be dissolved, and the entire protruding portion 404 is apt to be dissolved in some cases. When the protruding portion 404 of the endoscopic lens 401 is dissolved, the peripheral wall portion of the attachment hole 403 of the distal end cover 402 rather than other portions is subjected to the thermal welding. That is, a thickness of the layer in which two materials are dissolved is increased. Therefore, the endoscopic lens 401 can be assuredly fixed in the attachment hole 403 of the end cover 402, thereby readily assuring water-tightness. As a result, a secure watertight portion can be provided on the entire (the whole circumference) lens outer circumference of the endoscopic lens 401.

On the other hand, in conventional examples, the endoscopic lens 401 is fixed in the attachment hole 403 of the distal end cover 402 by adhesion or soldering. When the endoscopic lens 401 is fixed by the adhesion, an operation must be securely performed to assure water-tightness, a lot of trouble is taken, and the endoscopic lens 401 is apt to be deteriorated with respect to sterilization of the endoscope. Furthermore, when the endoscopic lens 401 is fixed by soldering, an operation step is required, and hence a price is increased.

Therefore, like this modification, when the peripheral edge region of the endoscopic lens 401 is integrated with the peripheral wall of the attachment hole 403 of the distal end cover 402 by thermal welding and subjected to the double molding, the endoscopic lens 401 can be inexpensively and assuredly fixed in the attachment hole 403 of the end cover 402 as compared with the conventional technology, and the water-tightness can be easily secured. Moreover, since the protruding portion 404 of the endoscopic lens 401 is provided to the end surface of the distal end cover 402, the protruding portion 404 is apt to be dissolved. When the dissolution occurs, a gap in the double molding is closed. Since the dissolved portion is arranged on the end surface of the distal end cover 402, an unnecessary gas is not produced. Therefore, durability with respect to the sterilization of the endoscope can be improved.

It is to be noted that the protruding portion 404 is provided on the outer peripheral surface of the distal end portion of the endoscopic lens 401 in Modification 1, but the protruding portion 404 may be provided on an outer peripheral portion of a rear end portion of the endoscopic lens 401. As described above, a position where the protruding portion 404 is disposed may be preferably selected in accordance with design of the endoscopic lens 401. In this case, since the protruding portion 404 has a function of retaining the endoscopic lens 401 with respect to the distal end cover 402, the endoscopic lens 401 can be assuredly held by the distal end cover 402.

### [Modification 2]

FIG. 37B shows Modification 2 of the fixing method of an endoscopic lens. A convergent conical taper surface 412 is provided on an outer peripheral surface of a distal end portion of an endoscopic lens 411.

Additionally, in this modification, at the time of performing the secondary molding of an end cover 402 using a secondary molding die of a double molding die, a peripheral edge region of an endoscopic lens 411 is integrated with a peripheral wall of an attachment hole 403 of the distal end cover 402 by thermal welding and subjected to double molding. At this time, since a heat capacity of a portion 412a at a corner edge of a rear end portion of the taper surface 412 is small, the endoscopic lens 411 is apt to be dissolved. Therefore, the endoscopic lens 411 can be assuredly fixed in the attachment hole 403 of the distal end cover 402, and the water-tightness can be readily secured.

Further, according to this modification, in the attachment hole 403 of the distal end cover 402, a distal end opening portion side has a small diameter, and a rear end opening portion side has a large diameter. Therefore, the attachment hole 403 has a function of retaining the endoscopic lens 411 with respect to the distal end cover 402, and the endoscopic lens 411 can be assuredly held by the distal end cover 402. The convergent conical taper surface 412 is provided on the distal outer peripheral surface of the distal end portion of the endoscopic lens 411, thereby contributing to die cutting performance at the time of molding and miniaturization of the distal end portion 306 of the endoscope 301. Furthermore, in this modification, the protruding portion which is difficult in view of die molding is no longer required, and hence a manufacturing cost is reduced.

### [Modification 3]

FIG. 37C shows Modification 3 of the fixing method of an endoscopic lens. In this modification, a convergent conical front taper surface 422 and a convergent conical rear taper surface 423 are provided on an outer peripheral surface of a distal end portion of an endoscopic lens 421. In this manner, the two taper surfaces are provided on the outer peripheral surface of the distal end portion of the endoscopic lens 421. A rear end of the front taper surface 422 is arranged on a rear end side apart from an optical lens effective region r2 of an illumination lens of the endoscopic lens 421.

Moreover, in this modification, when performing the secondary molding of a distal end cover 402 using a secondary molding die of a double molding die, a peripheral edge region of the endoscopic lens 421 is integrated with a peripheral wall of an attachment hole 403 of the end cover 402 by thermal welding and subjected to the double molding. At this time, since a heat capacity of a corner edge portion 422a of a rear end portion of the front taper surface 422 and a heat capacity of a corner edge portion 423a of a rear end portion of the rear taper surface 423 are small, the endoscopic lens 421 is apt to be dissolved. Therefore, the endoscopic lens 421 can be assuredly fixed in the attachment hole 403 of the end cover 402, thereby readily assuring the water-tightness.

Furthermore, according to this modification, in the attachment hole 403 of the distal end cover 402, a distal end opening portion side has a small diameter, and a rear end opening portion side has a large diameter. Therefore, the attachment hole 403 has a function of retaining the endoscopic lens 421 with respect to the distal end cover 402, thereby assuredly holding the endoscopic lens 421 by the distal end cover 402.

Moreover, a rear end of the front taper surface 422 is arranged on the rear end side than the optical lens effective region r2 of the illumination lens of the endoscopic lens 421. Therefore, when performing the secondary molding of the distal end cover 402, dissolved parts of a corner edge portion 422a of the rear end portion of the front taper surface 423 and a corner edge portion 423a of the rear end portion of the rear taper surface 423 are not mixed with a material of the end cover 402, and the endoscopic lens 421 is not optically affected by such mixing.

Additionally, the present invention is not restricted to the foregoing embodiment and, as a matter of course, it can be modified and embodied without departing from the gist of the present invention.

The present invention is effective in the technical field of, e.g., a manufacturing method of a resin molded article such as a multicolor molded article for integrally molding an optical element such as a lens and a support member such as a lens frame using different resin materials, a resin molded article, a resin molded article for an endoscope, and a manufacturing apparatus of the resin molded article.

## Claims

1. A manufacturing method of a resin molded article (5, 313, 353), comprising:
a primary molding step of molding a primary compact (3, 321) having an optical element (1, 312, 52) and a protruding portion (2, 320) that protrudes from the optical element (1, 312, 52) by using a light transmissive molding material; and
a secondary molding step of molding a secondary compact (4, 306a, 316, 351) that supports the primary compact (3, 321) by using a molding material different from the molding material of the primary compact (3, 321) and integrating the primary compact (3, 321) with the secondary compact (4, 306a, 316, 351),
wherein the protruding portion (2, 320) is molded to protrude on the secondary compact (4, 306a, 316, 351) side, and
at the primary molding step, the molding material of the primary compact (3, 321) is supplied into a molding space (1A) for the optical element (1, 312, 52) from a gate (24a, 322a) of a molding die (29) for the primary compact (3, 321) through a molding space (2A) for the protruding portion (2, 320) and it is thereby supplied into a cavity (34) of a molding die (29) for the primary compact (3, 321).

2. The manufacturing method of the resin molded article (5) according to claim 1,
wherein, at the secondary molding step, the secondary compact (4) is molded to bury the protruding portion (2).

3. A resin molded article (5) manufactured by the manufacturing method of the resin molded article (5) according to claim 1, further comprising:
a gate mark (41) which is provided on a surface (20a2) of the protruding portion (2) protruding on the secondary compact (4) side and which is a mark of a gate (24a) through which the molding material of the primary compact (3) is supplied into the cavity (34) of the molding die (29) for the primary compact (3).

4. The resin molded article (5) according to claim 3,
wherein the protruding portion (2) is buried in the secondary compact (4).

5. The resin molded article (5) according to claim 3,
wherein the optical element (1) has two surfaces (1a, 1b) that face each other and a peripheral wall surface (1c),
the protruding portion (2) is protruded outwards from the peripheral wall surface (1c),
the secondary compact (4) has peripheral wall portions (4a) which surround the peripheral wall surface (1c) of the optical element (1), and
the optical element (1) is supported between the peripheral wall portions (4a).

6. The resin molded article (5) according to claim 5,
wherein a thickness of the protruding portion (2) is smaller than a thickness of the peripheral wall surface (1c) of the primary compact (3).

7. The resin molded article (5) according to claim 3,
wherein the protruding portion (2) is provided at a position other than a functional portion (1a, 1b) of the primary compact (3).

8. A resin molded article (313, 353) for an endoscope (301), the resin molded article (313, 353) being formed by the manufacturing method of the resin molded article (5) according to claim 1.

9. The resin molded article (313, 353) for the endoscope (301) according to claim 8,
wherein the protruding portion (320) is provided at a position outside an optical effective range (r1) of the optical element (312).

10. The resin molded article (313, 353) for the endoscope (301) according to claim 8,
wherein the optical element (312) is an illumination lens (312) for the endoscope (301),
the illumination lens (312) is arranged on a distal end side than an exit end surface (311a) of a light guide (311), and
the protruding portion (320) is arranged on a proximal end side of the light guide (311) than the exit end surface (311a).

11. The resin molded article (313, 353) for the endoscope (301) according to claim 8,
wherein the optical element (52) includes an observation window (52) of the endoscope (301),
the observation window (52) is arranged on a distal end side than an incidence end surface (3151a) of an image guide (3151), and
the protruding portion (320) is arranged on a proximal end side than the image guide (3151).

12. The resin molded article (313, 353) for the endoscope (301) according to claim 8,
wherein the optical element (52) includes an observation window (52) of the endoscope (301),
the observation window (52) is arranged on the distal end side than an incidence end surface (315a) of an imaging unit (315), and
the protruding portion (320) is arranged on the proximal end side than the imaging unit (315).

13. The resin molded article (313, 353) for the endoscope (301) according to claim 8,
wherein the secondary molded article (306a, 316, 351) is a distal end constituent portion (306a, 316, 351) which is molded using a molding material different from a molding material of the optical element (312, 52), supports the optical element (312, 52), integrated with the optical element (312, 52), and constitutes a distal end portion (306) of the endoscope (301), and
the distal end constituent portion (306a, 316, 351) is formed of a light blocking member that blocks transmission of light.

14. An endoscope (301) using the resin molded article (313, 353) for the endoscope (301) according to claim 8.

15. A manufacturing apparatus of a resin molded article (5, 313, 353) manufactured by the manufacturing method of the resin molded article (5) according to claim 1.
